(19) Europäisches Patentamt
European Patent Office
Office européen des brevets

(11) **EP 2 191 309 B1**

(12) **EUROPÄISCHE PATENTSCHRIFT**

(45) Veröffentlichungstag und Bekanntmachung des Hinweises auf die Patenterteilung:
**21.05.2014 Patentblatt 2014/21**

(21) Anmeldenummer: **08787404.6**

(22) Anmeldetag: **22.08.2008**

(51) Int Cl.:
*G02B 6/122* *(2006.01)*       *C08F 257/00* *(2006.01)*
*C08F 285/00* *(2006.01)*       *C08F 265/04* *(2006.01)*
*C08F 291/00* *(2006.01)*

(86) Internationale Anmeldenummer:
**PCT/EP2008/061002**

(87) Internationale Veröffentlichungsnummer:
**WO 2009/027328 (05.03.2009 Gazette 2009/10)**

(54) **PHOTONISCHE KRISTALLE AUS POLYMERTEILCHEN MIT INTERPARTIKULÄRER WECHSELWIRKUNG**

PHOTONIC CRYSTALS CONSISTING OF POLYMER PARTICLES WITH INTERPARTICULATE INTERACTION

CRISTAUX PHOTONIQUES À PARTIR DE PARTICULES POLYMÈRES À INTERACTION INTERPARTICULAIRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.08.2007 EP 07114965**

(43) Veröffentlichungstag der Anmeldung:
**02.06.2010 Patentblatt 2010/22**

(73) Patentinhaber: **BASF SE**
**67056 Ludwigshafen (DE)**

(72) Erfinder:
• **LEYRER, Reinhold J.**
**67125 Dannstadt-Schauernheim (DE)**
• **WOHLLEBEN, Wendel**
**68165 Mannheim (DE)**

(56) Entgegenhaltungen:
**WO-A-01/18283        WO-A-2006/084123**
**JP-A- 2002 341 161**

• **WOSTYN K. ET AL: "Optical properties and orientation of arrays of polystyrene spheres deposited using convective self-assembly" J. CHEM. PHYS., Bd. 118, Nr. 23, 15. Juni 2003 (2003-06-15), Seiten 10752-10757, XP008099360**

• **RUHL T ET AL: "Photonic crystals from inorganic-polymeric hybrid-particles" PROCEEDINGS OF THE SPIE, Bd. 6182, 3. April 2006 (2006-04-03), Seiten 61820J-1-61820J-10, XP002507311**

• **FLEISCHHAKER F ET AL: "Functional opals from reactive polymers: complex structures, sensors, and modified photoluminescence" MACROMOLECULAR SYMPOSIA WILEY-VCH VERLAG GMBH GERMANY, Bd. 254, Nr. 1, August 2007 (2007-08), Seiten 210-216, XP002507312 ISSN: 1022-1360**

• **WATANABE OSAMU ET AL: "Area-selective photoimmobilization of a two-dimensional array of colloidal spheres on a photodeformed template formed in photoresponsive azopolymer film" APPLIED PHYSICS LETTERS, AIP, AMERICAN INSTITUTE OF PHYSICS, MELVILLE, NY, Bd. 88, Nr. 20, 18. Mai 2006 (2006-05-18), Seiten 204107-204107, XP012081781 ISSN: 0003-6951**

• **SHIMMIN R.G. ET AL: "Room-temperature assembly of germanium photonic crystals through colloidal crystal templating" CHEMISTRY OF MATERIALS, Bd. 19, 17. April 2007 (2007-04-17), Seiten 2102-2107, XP002507313**

• BIRGER LANGE ET AL: "3D Defect Engineering in Polymer Opals", PROCEEDINGS OF SPIE, SPIE, US, vol. 6182, 1 January 2006 (2006-01-01), pages 61821w/1-11, XP007922129, ISSN: 0277-786X, DOI: 10.1117/12.662046

**Beschreibung**

Die Erfindung betrifft die Verwendung von Polymerteilchen mit interpartikulärer Wechselwirkung zur Herstellung von photonischen Kristallen und photonische Kristalle, die durch diese Verwendung erhältlich sind.

Ein photonischer Kristall besteht aus periodisch angeordneten dielektrischen Strukturen, welche die Ausbreitung von elektromagnetischen Wellen beeinflussen. Gegenüber normalen Kristallen haben die periodischen Strukturen solche Größenordnungen, dass Wechselwirkungen mit elektromagnetischer Strahlung großer Wellenlänge auftreten und so optische Effekte im Bereich des UV Lichts, sichtbaren Licht, der IR- oder auch Mikrowellenstrahlung für technische Zwecke nutzbar gemacht werden können.

Synthetische Polymere wurden bereits zur Herstellung von photonischen Kristallen verwendet. Aus EP-A-955 323 und DE-A-102 45 848 ist die Verwendung von Emulsionpolymerisaten mit einer Kern/Schale Struktur bekannt. Die Kern /Schale-Teilchen werden verfilmt, wobei die äußere, weiche Schale eine Matrix bildet, in der der feste Kern eingelagert ist. Die Gitterstruktur wird von den Kernen gebildet, die Schale dient nach der Verfilmung lediglich zur Fixierung der Struktur.

Chad E. Reese and Sandford A. Asher , Journal of Colloid and Interface Science 248, 41-46 (2002) offenbaren die Verwendung von großen, geladenen Polymerteilchen zur Herstellung von photonischen Kristallen.Das verwendete Polymer besteht aus Styrol und Hydroxyethylacrylat (HEA). Das als Initiator eingesetzte Kaliumpersulfat reagiert auch mit HEA, wodurch sich die gewünschten ionische Gruppen ausbilden.

Die Herstellung großer Polymerteilchen aus Polymethylmethacrylat ist in EP-A-1 046 658 beschrieben, eine Verwendung zur Herstellung photonischer Kristalle ist nicht erwähnt.

T. Ruhl et al, "Photonic crystals from inorganic - polymeric hybrid - particles", Proceedings of the SPIE, vol. 6182, pp. 61820J-1:10 beschreibt eine wässrige Dispersion von *"silica-PMMA core-shell'* Teilchen, die durch Verflüchtigung des Wassers gebildet werden, wobei die Verknüpfung der Teilchen durch physikalische Bindung *("thin outer adhesive layer of polyethylacrylate")* an ihren Berührungspunkten erfolgt. Der Kern der anorganischen Polymerhybridteilchen besteht aber aus Quartz. Die Polymerhybridteilchen sind somit keine Polymerteilchen, deren Kern zu mehr als 70 Gew.-% aus monovalenten Kohlenwasserstoff-Monomeren besteht.

F. Fleischhaker et al, "Functional opals from reactive polymers: complex structures, sensors, and modified photoluminescence", Macromolecular Symposia, Bd. 254, Nr. 1, pp. 210-216 (10.08.2007) beschreibt eine wässrige Dispersion von *"PtBMA-epoxy group core-shell'* Polymerteilchen, die durch Verflüchtigung des Wassers gebildet werden, wobei die Verknüpfung der Teilchen durch chemische Bindung *("temperature induced chemical crosslinking")* an ihren Berührungspunkten erfolgt. Die *"PtBMA-epoxy group core-shell'* Polymerteilchen werden aber nicht zur Herstellung eines inversen photonischen Kristall verwendet.

Die prioritätsältere, nicht vorveröffentlichte Europäische Patentanmeldung mit dem Aktenzeichen 06123516.4 betrifft photonische Kristalle aus ungeladenen Polymerteilchen, die vorzugsweise keine ionischen Gruppen enthalten und bevorzugt auch keine polaren Gruppen enthalten. Die Polymerteilchen weisen an ihren Berührungspunkten keine Verknüpfungsstellen auf.

Für viele Anwendungen werden möglichst große photonische Kristalle gewünscht. Voraussetzung für sehr gute optische Eigenschaften ist dabei eine möglichst gut ausgebildete, d. h. möglichst ideale Gitterstruktur über den gesamten photonischen Kristall.

Aufgabe der vorliegenden Erfindung war daher die Bereitstellung großer photonischer Kristalle mit guten optischen Eigenschaften und zu deren Herstellung geeigneter Polymerteilchen.

Die Aufgabe wird erfindungsgemäß gelöst durch die Verwendung von Polymerteilchen zur Herstellung von photonischen Kristallen, bei der die Polymerteilchen nicht verfilmen und an ihren Berührungspunkten im photonischen Kristall Verknüpfungsstellen aufweisen, die eine Verknüpfung der Teilchen durch physikalische oder chemische Bindung erlauben, ohne das Volumen der Zwickelphase um mehr als 10% zu vermindern. Die Aufgabe wird durch die Merkmale des Anspruchs 1 gelöst.

Die Aufgabe wird zudem gelöst durch, gegebenenfalls strukturierte, photonische Kristalle, die unter Verwendung der vorstehenden Polymerteilchen erhalten werden.

Die Aufgabe wird zudem gelöst durch ein Verfahren zur Herstellung der, gegebenenfalls strukturierten, photonischen Kristalle, bei dem die photonischen Kristalle aus einer wässrigen Dispersion der Polymerteilchen durch Verflüchtigung des Wassers gebildet werden.

Die Erfindung betrifft zudem die Verwendung der, gegebenenfalls strukturierten, photonischen Kristalle zur Herstellung von Templaten, als optische Bauteile oder zur Herstellung von optischen Bauteilen.

Die erfindungsgemäß eingesetzten Polymerteilchen weisen an ihren Berührungspunkten im photonischen Kristall Verknüpfungsstellen auf. Dabei müssen nicht an sämtlichen Berührungspunkten Verknüpfungsstellen vorliegen. Vorzugsweise liegen an mindestens 40%, besonders bevorzugt an mindestens 60%, insbesondere an mindestens 80%, ganz besonders bevorzugt an mindestens 90% der Berührungspunkte im photonischen Kristall Verknüpfungsstellen vor.

Dabei erfolgt die Verknüpfung durch physikalische oder chemische Bindung so, dass das Volumen der Zwickelphase um nicht mehr als 30 %, vorzugsweise nicht mehr als 10% vermindert wird, null eingeschlossen. Besonders bevorzugt wird das Volumen der Zwickelphase um nicht mehr als 5% vermindert, insbesondere um nicht mehr als 2%. Es ist erfindungsgemäß gewünscht, das Volumen der Zwickelphase so wenig wie möglich zu vermindern. Eine Verminderung erfolgt beispielsweise durch eine Matrix-Bildung, wie sie in DE-A-102 45 848 beschrieben ist.

Als Zwickelphase werden die verbleibenden Hohlräume im photonischen Kristall bezeichnet, die sich nach der Bildung des photonischen Kristalls aus einer wässrigen Dispersion der Polymerteilchen durch Verflüchtigung des Wassers bilden. Erfindungsgemäß ist es bevorzugt, dass durch die Verknüpfung der Teilchen keine wesentliche Verminderung dieser Hohlräume auftritt, damit sie zur Herstellung eines anorganischen photonischen Kristalls nachfolgend vollständig zur Verfügung stehen.

Gemäß der Erfindung, erfolgt die Verknüpfung der Teilchen durch chemische kovalente Bindung oder Wasserstoffbrücken-Bindung.

Bevorzugt ist gemäß einer Ausführungsform der Erfindung, dass die Polymerteilchen eine gewichtsmittlere Teilchengröße > 600 nm aufweisen.

Bevorzugt ist gemäß einer Ausführungsform der Erfindung, dass der Polydispersitätsindex als Maß für die Einheitlichkeit der Polymerteilchen < 0,15 ist, wobei der Polydispersitätsindex nach der Formel p.i.=(D90-D10)/D50, worin D90, D10 und D50 Teilchendurchmesser bezeichnen, für die gilt:

D90:  90 Gew.-% der Gesamtmasse aller Teilchen hat einen Teilchendurchmesser < oder = D90

D50:  50 Gew.-% der Gesamtmasse aller Teilchen hat einen Teilchendurchmesser $\leq$ D50

D10:  10 Gew.-% der Gesamtmasse aller Teilchen hat einen Teilchendurchmesser < oder = D10,

berechnet wird.

Bevorzugt ist gemäß einer Ausführungsform der Erfindung, dass die Polymerteilchen zumindest an den Berührungspunkten auf ihrer Oberfläche aufpolymerisierte Polymere aufweisen, die ineinander diffundieren können und deren Glasübergangstemperatur unterhalb der Kristallisationstemperatur des photonischen Kristalls liegen.

Bevorzugt ist gemäß einer Ausführungsform der Erfindung, dass die Polymerteilchen zumindest an den Berührungspunkten auf ihrer Oberfläche polare Gruppen oder zur Ausbildung von Wasserstoffbrücken geeignete Gruppen aufweisen, die eine Verknüpfung bei der Kristallisation des photonischen Kristalls ermöglichen.

Gemäß der Erfindung, wird die chemische kovalente Bindung dadurch erreicht, dass die Polymerteilchen zumindest an den Berührungspunkten an das Polymerteilchen gebundene chemische Gruppen aufweisen, die miteinander bei Umgebungstemperatur, thermisch, durch Redoxreaktion, photochemisch, gegebenenfalls auch unter Verwendung photoaktivierbarer Initiatoren oder Katalysatoren und/oder über einen zusätzlichen Vernetzer kovalent miteinander verbunden werden können.

Gemäß der Erfindung, weisen die Polymerteilchen zumindest an den Berührungspunkten an das Polymer gebundene chemische Gruppen auf die miteinander oder über einen zusätzlichen Vernetzer, Werstoffbrücken-Bindungen eingehen können.

Gemäß der Erfindung, bestehen die Polymerteilchen zumindest im Kern zu mehr als 70 Gew.-%, vorzugsweise zu mehr als 90 Gew.-% aus monovalenten Kohlenwasserstoff-Monomeren und zu 0 bis 30 Gew.-%, vorzugsweise 0 bis 10 Gew.-% aus vernetzenden Monomeren.

Bevorzugt ist gemäß einer Ausführungsform der Erfindung, dass die Polymerteilchen zu mehr als 90 Gew.-% aus Styrol bestehen und es sich beim Vernetzer um Divinylbenzol handelt.

Bevorzugt ist gemäß einer Ausführungsform der Erfindung, dass die Polymerteilchen die Gitterstruktur des photonischen Kristalls bilden, ohne in eine flüssige oder feste Matrix eingebettet zu sein.

Bevorzugt ist gemäß einer Ausführungsform der Erfindung, dass dass die Polymerteilchen eine gewichtsmittlere Teilchengröße größer 900 nm haben.

Bevorzugt ist gemäß einer Ausführungsform der Erfindung, dass der Polydispersitätsindex als Maß für die Einheitlichkeit der Polymerteilchen kleiner 0,10 ist.

Bevorzugt ist gemäß einer Ausführungsform der Erfindung, dass sich auf der Oberfläche der Polymerteilchen keine oberflächenaktiven Hilfsmittel, die zur Dispergierung von Polymerteilchen in Wasser verwendet werden, befinden.

Bevorzugt ist gemäß einer Ausführungsform der Erfindung, dass die Monomeren, aus denen die Polymerteilchen bestehen, im Polymerteilchen in ungeladener Form vorliegen.

Bevorzugt ist gemäß einer Ausführungsform der Erfindung, dass die Polymerteilchen zumindest im Kern zu 0,01 Gew.-% bis 10 Gew.-%, bevorzugt zu 0,1 Gew.-% bis 3 Gew.-% aus vernetzenden Monomeren (Vernetzer) bestehen.

Bevorzugt ist gemäß einer Ausführungsform der Erfindung, dass die Polymerteilchen zumindest im Kern eine Glasübergangs-temperatur oberhalb 50 °C, bevorzugt oberhalb von 80 °C besitzen.

Bevorzugt ist gemäß einer Ausführungsform der Erfindung, dass dass die Herstellung der Polymerteilchen durch emulgatorfreie oder emulgatorhaltige Emulsionspolymerisation erfolgt.

Bevorzugt ist gemäß einer Ausführungsform der Erfindung, dass die Herstellung der Polymerteilchen durch emulgatorfreie oder emulgatorhaltige Emulsionspolymerisation und Salzagglomeration erfolgt.

Bevorzugt ist gemäß einer Ausführungsform der Erfindung, dass die Herstellung der Polymerteilchen durch emulgatorfreie oder emulgatorhaltige Emulsionspolymerisation und Quellungspolymerisation erfolgt.

Bevorzugt ist gemäß einer Ausführungsform der Erfindung, dass die Herstellung der Polymerteilchen durch emulgatorfreie oder emulgatorhaltige Emulsionspolymerisation, Salzagglomeration und Quellungspolymerisation erfolgt.

Bevorzugt ist gemäß einer Ausführungsform der Erfindung, dass auch die Quellungspolymerisation emulgatorfrei oder emulgatorhaltig ist.

Bevorzugt ist gemäß einer Ausführungsform der Erfindung, dass die Quellungspolymerisation in mindestens zwei Stufen (Quellungsstufen) vorgenommen wird.

Bevorzugt ist gemäß einer Ausführungsform der Erfindung, dass das Polymer, bzw. die Polymerteilchen vernetzt sind und der Vernetzer bei der Herstellung in der letzten Quellungsstufe zugegeben wird.

Gemäß einer Ausführungsform der Erfindung haben die photonischen Kristalle bevorzugt einen Teilchenabstand, bezogen auf den Schwerpunkt der Teilchen, > 600 nm, besonders bevorzugt > 900 nm.

Bevorzugt sind gemäß einer Ausführungsform der Erfindung photonische Kristalle mit mindestens einer Kantenlänge > 200 $\mu$m, vorzugsweise > 500 $\mu$m, besonders bevorzugt größer 2 mm.

Bei der Herstellung von den Templaten ist es gemäß einer Ausführungsform bevorzugt, die photonischen Kristalle zur Herstellung von Templaten mit definierten Defektstrukturen zu verwenden.

Zu den Polymerteilchen

Für die erfindungsgemäße Verwendung sollen die Polymerteilchen eine geeignete Größe haben, wobei alle Polymerteilchen möglichst einheitlich sein sollen, d. h. im Idealfall genau die gleiche Größe haben.

Die Teilchengröße und die Teilchengrößenverteilung kann in an sich bekannter Weise, z. B. mit einer analytischen Ultrazentrifuge (W. Mächtle, Makromolekulare Chemie 185 (1984) Seite 1025-1039) bestimmt werden und daraus der D10, D50 und D90-Wert entnommen und der Polydispersitätsindex bestimmt werden, auf diese Methode beziehen sich die Werte und Angaben in der Beschreibung und in den Beispielen.

Eine weitere Methode zur Bestimmung der Teilchengröße und der Teilchengrößenverteilung ist die hydrodynamische Fraktionierung (HDF).

Die Messkonfiguration der HDF besteht aus einem PSDA Particle Size Distribution Analyser der Firma Polymer Labs. Die Parameter sind wie folgt: Es wird eine Cartridge Typ Nr.2 (Standard) verwendet. Die Messtemperatur beträgt: 23,0 °C, die Messzeit 480 Sekunden, die Wellenlänge des UV-Detektors liegt bei 254nm. Auch bei dieser Methode wird der D10, D50 und D90-Wert der Verteilungskurve entnommen und der Polydispersitätsindex bestimmt.

Der D50-Wert der Teilchengrößenverteilung entspricht der gewichtsmittleren Teilchengröße; 50 Gew.-% der Gesamtmasse aller Teilchen hat einen Teilchendurchmesser kleiner oder gleich D50.

Bevorzugt ist die gewichtsmittlere Teilchengröße größer 900 nm.

Der Polydispersitätsindex ist ein Maß für die Einheitlichkeit der Polymerteilchen, er wird nach der Formel

$$\text{P.I.} = (D90 - D10)/D50$$

berechnet, wobei D90, D10 und D50 Teilchendurchmesser bezeichnen, für die gilt:

D90: 90 Gew.-% der Gesamtmasse aller Teilchen hat einen Teilchendurchmesser kleiner oder gleich D90

D50: 50 Gew.-% der Gesamtmasse aller Teilchen hat einen Teilchendurchmesser kleiner oder gleich D50

D10: 10 Gew.-% der Gesamtmasse aller Teilchen hat einen Teilchendurchmesser kleiner oder gleich D10.

Der Polydispersitätsindex ist vorzugsweise kleiner 0,15, besonders bevorzugt kleiner 0,10, ganz besonders bevorzugt kleiner 0,06.

Bei Verfahren der Emusionspolymerisation werden die zu polymerisierenden, hydrophoben Monomere in Wasser mit Hilfe einer oberflächenaktiven Verbindung, z. B. ein Emulgator oder ein Schutzkolloid emulgiert und dann polymerisiert. Die oberflächenaktive Verbindung findet sich nach der Polymerisation auf der Oberfläche der erhaltenen, in der wässrigen Dispersion verteilten Polymerteilchen. Auch nach der Entfernung des Wassers und Ausbildung eines Polymerfilms verbleiben diese Verbindungen als Zusatzstoffe im Polymer.

Bei den erfindungsgemäß verwendeten Polymerteilchen finden sich wahlweise keine derartigen oberflächenaktiven Hilfsmittel auf der Oberfläche. Es kann bereits bei der Herstellung der Polymerteilchen auf oberflächenaktive Hilfsmittel verzichtet werden.

Die Verknüpfungsstellen an den Berührungspunkten der Polymerteilchen können auf unterschiedliche Art vorgesehen werden, beispielsweise durch oberflächliche Funktionalisierung der Polymerteilchen. Der Kern des Polymerteilchens kann dabei wie nachfolgend beschrieben aufgebaut sein. Die Funktionalisierung kann an einzelnen Stellen der Kernoberfläche vorliegen, oder auch in Form einer Schale um den Kern. Es ist erfindungsgemäß jedoch nicht erforderlich, dass der Kern vollständig von einer Schale mit der Funktionalisierung umschlossen ist. Der Grad an Funktionalisierung sollte bevorzugt so sein, dass die vorstehend genannten Anteile an Verknüpfungspunkten vorliegen.

Vorzugsweise besteht das Kern-Polymer zu mehr als 90 % aus hydrophoben Monomeren, die keine ionischen und bevorzugt auch keine polaren Gruppen enthalten.

Ganz besonders bevorzugt besteht das Kern-Polymer zu mehr als 90 Gew.-% aus Kohlenwasserstoff-Monomeren, d. h. aus Monomeren die keine anderen Atome als Kohlenstoff und Wasserstoff enthalten.

Besonders bevorzugt besteht das Kern-Polymer zu mehr als 90 Gew.-%, besonders bevorzugt zu mehr als 95 Gew.-% aus Styrol.

Vorzugsweise ist das Kern-Polymer, bzw. sind die Kern-Polymerteilchen, zumindest teilweise vernetzt.

Das Kern-Polymer, bzw. die Kern-Polymerteilchen bestehen bevorzugt zu 0,01 Gew.-% bis 10 Gew.-%, besonders bevorzugt zu 0,1 Gew.-% bis 3 Gew.-% aus vernetzenden Monomeren (Vernetzer).

Bei den Vernetzern handelt es sich insbesondere um Monomere mit mindestens zwei, vorzugsweise zwei copolymersierbaren, ethylenisch ungesättigten Gruppen. In Betracht kommt z. B. Divinylbenzol.

Das Kern-Polymer, bzw. die Kern-Polymerteilchen haben vorzugsweise eine Glasübergangstemperatur oberhalb 50 °C, bevorzugt oberhalb von 80 °C.

Die Glasübergangstemperatur wird im Rahmen der vorliegenden Anmeldung nach der Fox-Gleichung aus der Glasübergangstemperatur, der Homopolymerisate der im Copolymerisat vorhandenen Monomeren und deren Gewichtsanteil berechnet:

$$1/Tg = xA/TgA + xB/TgB + xC/TgC +$$

Tg: berechnete Glasübergangstemperatur des Copolymeren

TgA: Glasübergangstemperatur des Homopolymeren von Monomer A

TgB, Tg entsprechend für Monomere B, C, etc.

xA: Masse Monomer A/Gesamtmasse Copolymer,

xB, xC entsprechend für Monomere B, C etc.

Die Fox-Gleichung ist in üblichen Fachbüchern angegeben, z. B. auch in Handbook of Polymer Science and Technology, New York, 1989 by Marcel Dekker, Inc.

Zur Herstellung des Polymeren

Die Herstellung erfolgt vorzugsweise durch Emulsionspolymerisation.

Wenn die Polymerteilchen auf der Oberfläche keine oberflächenaktiven Hilfsmittel enthalten sollen, erfolgt die Herstellung besonders bevorzugt durch emulgatorfreie Emulsionspolymerisation.

Bei der emulgatorfreien Emulsionspolymerisation werden die Monomeren ohne oberflächenaktive Hilfsmittel in Wasser dispergiert und stabilisiert, dies erfolgt insbeondere durch intensives Rühren. Ansonsten wird mit Emulgatoren gearbeitet, wie im eingangs erwähnten Stand der Technik beschrieben.

Die Emulsionspolymerisation erfolgt in der Regel bei 30 bis 150, vorzugsweise 50 bis 100 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Das Zulaufverfahren kann in Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Eine Teilmenge der Monomere kann, wenn gewünscht, zu Beginn der Polymerisation im Polymerisationsgefäß vorgelegt werden, die übrigen Monomere, bzw. alle Monomere, wenn keine Monomere vorgelegt werden, werden beim Zulaufverfahren im Laufe der Polymerisation zugegeben.

Auch der Regler kann, falls er verwendet wird, zum Teil vorgelegt werden, ganz oder teilweise während der Polymerisation oder gegen Ende der Polymerisation zugegeben werden.

Durch die erfindungsgemäße, z. B. emulgatorfreie, Emulsionspolymerisation sind stabile Emulsionen von großen Polymerteilchen erhältlich.

Es sind weitere Maßnahmen bekannt, welche den mittleren Teilchendurchmesser vergrößern. In Betracht kommen insbesondere die, z. B. emulgatorfreie, Salzagglomeration oder die z. B. emulgatorfreie, Quellungspolymerisation.

Bei dem Verfahren der Salzagglomeration bewirken gelöste Salze eine Agglomeration von Polymerteilchen und führen so zu einer Teilchenvergrößerung.

Vorzugsweise wird die z. B. emulgatorfreie, Emulsionspolymerisation mit der Salzagglomeration kombiniert; die Herstellung der Polymerteilchen erfolgt daher bevorzugt durch, z. B. emulgatorfreie, Emulsionspolymerisation und Salzagglomeration.

Vorzugsweise ist das Salz schon zu Beginn der Emulsionspolymerisation im Wasser gelöst, so dass die Agglomeration schon zu Beginn der Emulsionpolymerisation eintritt und die erhaltenen, agglomerierten Polymerteilchen dann gleichmäßig während der Emulsionspolymerisation wachsen.

Die Salzkonzentration beträgt vorzugsweise 0,5 bis 4 % bezogen auf das zu agglomerierende Polymer, beziehungsweise 0,05 % bis 0,5 % bezogen auf das eingesetzte Wasser beziehungsweise Lösungsmittel.

Als Salze in Betracht kommen alle in Wasser löslichen Salze, z. B. die Chloride oder Sulfate der Alkali oder Erdalkalimetalle.

Die, z. B. emulgatorfreie, Emulsionspoymerisation kann auch mit einer Quellungs-polymerisation kombiniert werden. Bei der Quellungspolymerisation werden einer bereits erhaltenen, vorzugsweise durch, z. B. emulgatorfreie, Emulsionspolymerisation erhaltenen wäßrigen Polymerdispersion (kurz 1. Stufe) weitere Monomere zugesetzt und die Polymerisation dieser Monomeren (2. Stufe oder Quellungsstufe) erst begonnen, nachdem diese Monomere in die bereits vorliegenden Polymerteilchen diffundiert sind und die Polymerteilchen gequollen haben.

In der 1. Stufe werden vorzugsweise 5 bis 50 Gew.-%, besonders bevorzugt 10 bis 30 Gew.-% aller Monomeren, aus denen das Polymer, bzw. die Polymerteilchen aufgebaut sind, durch, z. B. emulgatorfreie, Emulsionspolymerisation polymerisiert. Die übrigen Monomeren werden in der Quellungsstufe polymerisiert. Die Menge der Monomeren der Quellungsstufe beträgt ein Vielfaches der Menge des eingesetzten Monomeren in der ersten Stufe, bevorzugt das zwei bis zehnfache, besonders bevorzugt das drei bis fünffachen.

Auch die Quellungspolymerisation kann emulgatorfrei erfolgen.

Insbesondere werden die Monomeren der Quellungsstufe erst dann zugeführt, wenn die Monomeren der 1. Stufe zu mindestens 80 Gew.-%, insbesondere zu mindestens 90 Gew.-% polymerisiert sind.

Merkmal der Quellungspolymerisation ist, dass mit der Polymerisation der Monomeren erst nach erfolgter Quellung begonnen wird.

Daher wird während und nach der Zugabe der Monomeren der Quellungsstufe vorzugsweise kein Initiator zugegeben. Wenn doch Initiator zugegeben wird oder sich Initiator im Polymerisationsgefäß befindet, wird die Temperatur so niedrig gehalten, dass keine Polymerisation erfolgt. Die Polymerisation der Monomeren der Quellungsstufe wird erst nach erfolgter Quellung durch Zugabe des Initiators und/oder Temperaturerhöhung durchgeführt. Das kann z. B. nach einem Zeitraum von mindestens einer halben Stunde nach Beendigung der Zugabe der Monomeren der Fall sein. Die Monomeren der Quellungsstufe werden dann polymerisiert, was zu einer stabilen Teilchenvergrößerung führt.

Die Quellungspolymerisation kann insbesondere auch in mindestens zwei Stufen (Quellungsstufen), besonders bevorzugt 2 bis 10 Quellungsstufen vorgenommen werden. Bei jeder Quellungsstufe werden die zu polymerisierenden Monomeren zugeführt, gequollen und anschließend polymerisiert; nach Polymerisation der Monomeren erfolgt die Zugabe und Quellung der Monomeren der nächsten Quellungsstufe mit anschließender Polymerisation etc.. Vorzugsweise werden alle Monomeren die durch Quellungspolymerisation polymerisiert werden sollen, auf die Quellungsstufen gleichmäßig verteilt.

In einer bevorzugten Ausführungsform ist das Polymer, bzw. die Polymerteilchen vernetzt, wozu ein vernetzendes Monomer (Vernetzer) mitverwendet wird (siehe oben). Vorzugsweise wird der Vernetzer erst bei der Quellungspolymerisation, besonders bevorzugt in der der letzten Quellungsstufe zugesetzt und polymerisiert.

In einer besonderen Ausführungsform erfolgt die Herstellung der Polymerteilchen daher durch; z. B. emulgatorfreie, Emulsionspolymerisation, gefolgt von einer Quellungs-polymerisation.

Besonders bevorzugt ist die Kombination der, z. B. emulgatorfreien, Emulsionpolymerisation mit der Salzagglomeration, wie oben beschrieben, und eine anschließende Quellungs-polymerisation.

Verknüpfung der Teilchen

Durch die erfindungsgemäße, funktionale Oberfläche deformieren die Polymerteilchen nicht, weisen jedoch auch ohne Matrix-Bildung eine sehr stabile, harte Kontaktfläche zueinander auf, so dass sie nicht deformiert werden. Dabei wird keine Zwischenschicht zur Herstellung der Teilchen benötigt, was den Herstellungsprozess deutlich vereinfacht. Erfindungsgemäß ist es möglich, die Polymerteilchen zur Erhöhung der Stabilität des Kristalls so zu modifizieren, dass sie physikalische oder chemische Bindungen an den Berührungsstellen eingehen können, ohne dass eine Schale eines modifizierten Polymers aufgebracht werden muss. So wird es möglich, dass bei der Herstellung der photonischen Kristalle durch Invertieren mit anorganischen Materialien wie $TiO_2$ oder Si eine hohe mechanische Stabilität des organischen Kristalls erreicht wird. Zur Herstellung der inversen Struktur werden im Teilchen keine Precursor verwendet.

Die Bindung der Polymerteilchen an den Berührungspunkten kann dabei durch physikalische und chemische Bindung, bevorzugt durch chemische kovalente Bindung, ionische oder polare Bindung, Wasserstoffbrücken-Bindung, van-der-Waals-Bindung oder Verschlaufung (Interdiffusion) erfolgen.

Die Interdiffusion wird insbesondere dadurch erreicht, dass auf die Teilchen Polymere aufpolymerisiert werden, deren Glasübergangstemperatur unterhalb der Kristallisationstemperatur des photonischen Kristalls liegt. Beispielsweise können auf einen Polystyrol-Kern Acrylate mit einer niedrigen Glasübergangstemperatur aufpolymerisiert werden. Besonders geeignet ist n- oder tert.-Butylacrylat. Der Anteil des diffusionsfähigen Polymers an gesamten Polymerteilchen beträgt vorzugsweise 1 bis 30 Gew.%. Die Aufbringung ist beispielsweise durch Quellungspolymerisation möglich. Die aufgebrachte Menge wird so eingestellt, dass keine Matrix-Bildung bei der Interdiffusion auftritt, so dass das Volumen der Zwickelphase nicht mehr vermindert wird.

Gemäß einer anderen Ausführungsform der Erfindung weisen die Polymerteilchen zumindest an den Berührungspunkten auf ihrer Oberfläche polare Gruppen oder zur Ausbildung von Wasserstoffbrücken geeigente Gruppen auf, die eine Verknüpfung bei der Kristallisation des photonischen Kristalls ermöglichen. Beispielsweise kann auf die Oberfläche Butandiolmonoacrylat aufgebracht werden, um eine polare Oberfläche zu erhalten.

Polare Gruppen werden vorzugsweise durch Hydroxygruppen bereitgestellt. Wasserstoffbrücken-Bindungen zwischen den Polymerteilchen werden vorzugsweise durch Hydroxygruppen und Säuregruppen erzeugt.

Die physikalischen Wechselwirkungen können dabei bereits beim Trocknen der Dispersion bei Umgebungstemperatur oder tieferen Temperaturen bewirkt werden, ohne dass ein zusätzlicher Temper-Schritt bei höheren Temperaturen erforderlich ist. Typischerweise sollte die physikalische Wechselwirkung bereits bei Temperaturen im Bereich von 10 bis 30°C eintreten. In anderen Fällen kann auch bei erhöhten Temperaturen, beispielsweise im Bereich von 30 bis 50°C getempert werden.

Die Bindung erfolgt vorzugsweise durch eine chemische, kovalente Bindung, wenn eine besonders hohe Bindungsstärke gewünscht ist. Dabei wird die interpartikuläre Wechselwirkung vorzugsweise durch reaktive Gruppen erreicht, die eine chemische Wechselwirkung oder eine Vernetzung bewirken. Besonders geeignet ist es, N-Methylolmethacrylamid (MAMOL) oder N-Methylolacrylamid (AMOL) einzusetzen. Diese reaktiven Monomere werden vorzugsweise an den teilchenförmigen Kern angebunden (beispielsweise durch Quellungspolymerisation) und nachfolgend über Red-Ox-Reaktion oder thermisch oder während des Trocknungsprozesses gegebenenfalls auch bei Raumtemperatur bei der Herstellung des Kristalls umgesetzt. Acrylsäure-Gruppen können durch Tempern bei erhöhter Temperatur im Bereich von 50 bis 100°C über Anhydridbildung vernetzen. Auch eine Maleinsäureanhydrid-Bildung ist möglich. Zudem können zusätzliche Vernetzer wie Aminomethylsilan im Serum der Dispersion zur zusätzlichen Stabilisierung eingesetzt werden. Derartige Vernetzer können auch bei der Herstellung der photonischen Kristalle zuvor auf das Glassubstrat aufgezogen worden sein.

Beim Einsatz von tert.-Butylacrylat, das an sich hydrophob ist, kann eine chemische Anbindung an die Oberfläche erreicht werden. Durch nachfolgende Isobuten-Abtrennung kann die hydrophile, gebundene Acrylsäure freigesetzt werden, die beispielsweise durch Salzbildung (mit Zn) oder Anhydrid-Bildung vernetzen kann. Es kann auch eine Acrylsäure-haltige Dispersion hierzu eingesetzt werden.

Tert.-Butylacrylat kann auch als Dispersion zugegeben werden, wobei das hydrophobe Teilchen sich an den Polymerteilchen anlagert oder in sie eindringt. Die Zn-Salzvernetzung führt zu erhöhter Stabilität in organischen Lösungsmitteln, bereits ohne Tempern.

Anstelle von Acrylsäure zur Salzbindung kann auch Maleinsäureanhydrid eingesetzt werden. Eine bevorzugte Salzbildung erfolgt mit $Zn(NH_3)_4(HCO_3)_2$. Geeignete einzusetzende Mengen sind dem Fachmann bekannt oder können durch einfache Versuche ermittelt werden.

Es können auch Diazetonacrylamid (DAAM) im Teilchen und Adipinsäuredihydrazid (ADDH) im Serum vorliegen, wodurch eine Dihydrazon-Bildung und damit eine interpartikuläre Vernetzung bei Raumtemperatur ohne Tempern möglich ist. Polymerteilchen, die freie Hydroxyl-Gruppen aufweisen, können mit MelaminFormaldehyd-Oligomeren im Serum (beispielsweise Luwipal®, insbesondere der Typen 063, 072, 073 und 069) umgesetzt werden, wobei eine chemische interpartikuläre Vernetzung erfolgt. Die Menge der modifizierenden Verbindungen beträgt vorzugsweise 0,01 bis 30 Gew.-%, besonders bevorzugt 0,5 bis 10 Gew.-%, bezogen auf die gesamten Polymerteilchen.

Der Einsatz von Hydroxyethylacrylat (HEA), Hydroxypropylacrylat (HPA) von Acrylsäure- und Maleinsäureanhydrid, abgemischt mit Dinatriumtetraborat führt zur interpartikulären Vernetzung ohne Tempern.

Gemäß einer Ausführungsform der Erfindung sind solche Dispersionen für photonische Kristalle bevorzugt, die durch UV-Bestrahlung interpartikulär vernetzt werden können oder durch dreidimensionale bildmäßige Belichtung strukturiert werden können. Hierbei können beispielsweise Hohlräume oder Leitungen aus der Struktur herausgeschossen werden. Die Strukturierung sollte dabei feiner sein als die Wellenlänge des (IR)-Lichts bei der späteren Anwendung als optisches Element.

Ein Beispiel für einen im Serum der Dispersion gelösten Vernetzer stellt Trimethylolpropantri(ethoxyacrylat) dar (Laromer® 8863) unter Verwendung des UV Initiators der Ciba Specialty Chemicals Irgacure 500. Die UV-aktivierte Vernetzung durch Bestrahlen des photonischen Kristalls mit UV-Licht führt dabei ebenfalls zur interpartikulären Vernetzung und zu einer erhöhten Stabilität des Kristalls. Vorzugsweise werden derartige UV- aktivierte Vernetzungssysteme in einer Menge von 0,01 bis 20 Gew.-%, bevorzugt in einer Menge von 0,1 bis 10 Gew.-% , besonders bevorzugt in einer Menge von 0,5 bis 5 Gew.-% bezogen auf die Polymerteilchen, eingesetzt.

Irgacure 500 enthält 50 % 1-Hydroxycyclohexylphenylketon und 50 % Benzophenon.

Es ist auch möglich, Dispersionsteilchen mit Epoxid-Gruppen auf der Oberfläche bereitzustellen, die durch einen UV-aktivierbaren Säurespender als Katalysator oder durch einen UV-aktivierbaren kationischen Initiator zur interpartikulären Vernetzung angeregt werden. UV-aktivierbare Säurespender können insbesondere Iodoniumsalze oder Sulfoniumsalze sein, die in einer Menge von 0,01 bis 20 Gew.-%, bevorzugt in einer Menge von 0,1 bis 10 Gew.%, besonders bevorzugt in einer Menge von 0,5 bis 5 Gew.-% bezogen auf die Polymerteilchen, eingesetzt.. Der Anteil an Epoxid-Gruppen, bezogen auf die gesamten Polymerteilchen, beträgt dabei vorzugsweise 0,1 bis 30 Gew.-% besonders bevorzugt 1 bis 10 Gew.-%.

Beim Einsatz von tert.-Butylacrylat-Gruppen auf der Oberfläche der Polymerteilchen kann ein UV-aktivierbarer Säurespender zugesetzt werden, der den katalytischen Abbau des tert.-Butylacrylats zu Acrylsäure im aus der Dispersion hergestellten photonischen Kristall bewirkt. Die UV-belichteten Stellen sind dann löslich und können mit einer wässrigen Natronlaugelösung herausgelöst werden. Diese Freiräume können mit hochbrechenden Materialien wie $TiO_2$ oder Silizium gefüllt werden, so dass ein inverser dreidimensional strukturierter photonischer Kristall entsteht.

Insgesamt ist zu beachten, dass keine geschlossene Schale um die Polymerteilchen notwendig ist, sondern ein punktweises Vorliegen der reaktiven Komponenten ausreicht. Die Bindungskräfte zwischen den Polymerteilchen müssen so groß sein, dass der Kapillardruck beim Trocknen des Kristalls und die Erweichung der Teilchen durch Schmelzpunkt-Depression durch die Bindungskräfte übertroffen werden.

Zur Herstellung der photonischen Kristalle

Zur Herstellung von photonischen Kristallen werden vorzugsweise die bei den vorstehend beschriebenen Herstellungsverfahren erhaltenen wässrigen Polymerdispersionen verwendet.

Der Feststoffgehalt der wässrigen Polymerdispersionen beträgt dazu bevorzugt 0,01 bis 60 Gew.-%, besonders bevorzugt 0,1 bis 30Gew.-%, ganz besonders bevorzugt 0,5 bis 10 Gew.-%. Hierzu werden die wie oben beschrieben hergestellten Polymerdispersionen, die bevorzugt mit einem Feststoffgehalt von 30 bis 60 % synthetisiert werden, in der Regel mit entsalztem Wasser verdünnt.

Vorzugsweise werden die photonischen Kristalle auf einem geeigneten Träger ausgebildet. Als Träger geeignet sind Substrate aus Glas, aus Silizium, aus natürlichen oder synthetischen Polymeren, aus Metall oder sonstigen beliebigen Materialien. Die Polymere sollen auf der Trägeroberfläche möglichst gut haften. Die Trägeroberfläche wird daher vorzugsweise chemisch oder physikalisch vorbehandelt, um eine gute Benetzung und gute Haftung zu erzeugen. Die Oberfläche kann z. B. durch CoronaEntladung vorbehandelt sein, mit Haftvermittlern beschichtet sein oder durch Behandlung mit einem Oxidationsmittel, z. B. $H_2O_2/H_2SO_4$ hydrophiliert sein.

Die Temperatur der Polymerdispersion und des Trägers liegen bei der Bildung der photonischen Kristalle vorzugsweise im Bereich von 15 bis 70 °C, besonders bevorzugt von 15 bis 40 °C, insbesondere bei Raumtemperatur (18 bis 25 °C). Die Temperatur liegt insbesondere unterhalb des Schmelzpunktes und unterhalb des Glasübergangstemperatur des Polymeren.

Die Herstellung der photonischen Kristalle erfolgt aus der wässrigen Dipsersion der Polymerteilchen vorzugsweise durch Verflüchtigung des Wassers.

Der Träger und die Polymerdispersion werden in Kontakt gebracht.

Die wässrige Polymerdispersion kann auf den horizontal liegenden Träger beschichtet werden, und bei Verflüchtigung des Wassers bildet sich der photonische Kristall aus.

Vorzugsweise wird der Träger zumindest teilweise in die verdünnte Polymerdispersion getaucht. Durch Evaporation des Wassers senkt sich der Meniskus und der photonische Kristall entsteht auf den ehemals benetzten Stellen des Trägers.

Dabei ist bei einem Winkel zwischen Träger und der Flüssigkeitsoberfläche ungleich 90° die kristalline Ordnung insbesondere bei Teilchen oberhalb 600 nm deutlich verbessert. Bei einem Kristallisationswinkel von 50° bis 70° wird die beste kristalline Ordnung erreicht.

In einer besonderen Ausführungsform können Träger und Polymerdispersion relativ zueinander mechanisch bewegt werden, vorzugsweise mit Geschwindigkeiten von 0,05 bis 5 mm/Stunde, besonders bevorzugt von 0,1 bis 2 mm/Stunde. Dazu kann der eingetauchte Träger langsam aus der wässrigen Polymerdispersion herausgezogen werden, und/oder die Polymerdispersion kann aus dem Behältnis abgelassen werden, z. B. durch Abpumpen.

Die Polymerteilchen sind in den photonischen Kristallen entsprechend einer Gitterstruktur angeordnet. Die Abstände zwischen den Teilchen entsprechen dabei den mittleren Teilchendurchmessern. Die Teilchengröße (siehe oben) und damit auch der Teilchenabstand, bezogen auf den Schwerpunkt der Teilchen, ist vorzugsweise größer 600 nm bevorzugt größer 900 nm.

Die Ordnung bzw. Gitterstruktur entsteht bei der vorstehenden Herstellung. Insbesondere entsteht eine fcc-Gitterstruktur (fcc = kubisch flächenzentriert = face-centered cubic), mit hexagonaler Symmetrie in den Kristallebenen parallel zur Oberfläche des Trägers.

Die erfindungsgemäß erhältlichen photonischen Kristalle haben eine sehr hohe kristalline Ordnung, d. h. bevorzugt zeigen unter 10 %, besonders bevorzugt unter 5 %, ganz besonders bevorzugt unter 2 % der Fläche jeder Kristallebene eine vom Rest des Kristalls abweichende oder gar keine kristalline Orientierung, und es gibt kaum Fehlstellen; insbesondere ist der Anteil der Fehlstellen oder abweichenden Ordnung daher kleiner 2 %, bzw. 0 %, bezogen auf die betrachtete Fläche. Die kristalline Ordnung kann mikroskopisch, insbesondere mit der Rasterkraftmikroskopie festgestellt werden. Bei dieser Methode betrachtet man die oberste Schicht des photonischen Kristalls; die vorstehenden Prozentangaben über den maximalen Anteil von Defektstellen gelten daher insbesondere für diese oberste Schicht. Die Zwischenräume zwischen den Polymerteilchen sind leer, d. h. sie enthalten allenfalls Luft.

Die erhaltenen photonischen Kristalle zeigen vorzugsweise einen Abfall der Transmission (Stop-Band) bei Wellenlängen größer gleich 1400nm (bei 600nm Teilchendurchmesser), besonders bevorzugt größer gleich 2330nm (bei 1000nm Teilchendurchmesser).

Erfindungsgemäß sind photonische Kristalle erhältlich, deren Bereiche einheitlicher kristalliner Ordnung in mindestens einer Raumrichtung eine Länge von mehr als 100, besonders bevorzugt mehr 200, ganz besonders bevorzugt mehr als 500 $\mu$m, speziell 1 mm bis 20 mm haben.

Besonders bevorzugt haben die photonischen Kristalle mindestens eine Länge, besonders bevorzugt sowohl eine Länge und eine Breite größer 200 $\mu$m, insbesondere größer 500 $\mu$m, speziell 1 mm bis 20 mm.

Die Dicke der photonischen Kristalle ist vorzugsweise größer 10 $\mu$m, besonders bevorzugt größer 30$\mu$m.

Zur Verwendung der photonischen Kristalle

Der photonische Kristall kann als Templat zur Herstellung eines inversen photonischen Kristalls verwendet werden. Dazu werden die Hohlräume zwischen den Polymerteilchen nach bekannten Verfahren mit den gewünschten Materialien, z. B. mit Silizium gefüllt, und danach werden die Polymerteilchen entfernt, z. B. durch Aufschmelzen und Herauslösen oder Herausbrennen bei hohen Temperaturen. Das erhaltene Templat hat die entsprechende inverse Gitterordnung des vorherigen photonischen Kristalls.

Der photonische Kristall oder der daraus hergestellte inverse photonische Kristall eignet sich als optisches Bauteil. Werden in den erfindungsgemäßen photonischen Kristall Defekte, beispielsweise mit Hilfe eines Lasers beziehungsweise einer 2-Photonenlaser-Anordnung oder einer holographischen Laseranordnung eingeschrieben und daraus der inverse photonische Kristall hergestellt, so ist sowohl dieser modifizierte photonische Kristall als auch der entsprechende strukturierte inverse photonische Kristalle als elektronisches optisches Bauelementen, wie beispielsweise als Multiplexer oder als optischer Halbleiter, verwendbar. Dabei ist eine thermische oder auch UV-Strukturierung möglich.

Der photonische Kristall, bzw. die Hohlräume des Kolloidkristalls können zur Einlagerung (Infiltration) anorganischer oder organischer Substanzen verwendet werden.

Die Erfindung wird durch die nachstehenden Beispiele näher erläutert.

Beispiele

verwendete Abkürzungen:

NaPS = Natriumperoxidisulfat;

MAMol = N-Methylolmethacrylamid ;
Texapon NSO = Natriumlaurylethersulfat mit ca. 2mol EO;
MAS = Methacrylsäure
HPA = Hydroxypropylacrylat
HEA = Hydroxyethylacrylat
Lutavit C = Ascorbinsäure
DVB = Divinylbenzol
AMOL = N-Methylolacrylamid

Referenzbeispiel 1

**Emulgatorfreie Emulsionspolymerisation ohne funktionale Oberfläche**

In einem Reaktor mit Ankerrührer, Thermometer, Gaseintrittsrohr, Beschickungsrohren und Rückflusskühler wurden zunächst 1300 g Wasser vorgelegt. Der Kolbeninhalt wurde anschließend erhitzt und bei einer Drehzahl von 200 min-1 gerührt. Während dieser Zeit wurde dem Reaktor Stickstoff zugeführt. Bei Erreichen einer Temperatur von 85°C wurde die Stickstoffzufuhr eingestellt und vermieden, dass Luft in den Reaktor gelangte. Dann wurden dem Reaktor 10% vom Monomerzulauf, bestehend aus 600 g Styrol, und10% einer Natriumperoxodisulfatlösung aus 6 g Natriumperoxodisulfat in 114 g Wasser zugeführt und 5 Minuten lang voroxidiert, dann wurde der Rest Natriumperoxodisulfatlösung innerhalb von 3 Stunden zugesetzt. Zeitgleich wurde der Rest des Monomerzulaufs 3 Stunden lang zudosiert. Nach Monomer- und Natriumperoxodisulfatlösungzulauf-Ende wurde die Dispersion weitere 3 Stunden bei 85°C gerührt. Danach wurde die Dispersion auf Raumtemperatur gekühlt.
Die Zusammensetzung der Zuläufe war wie folgt:

Vorlage:

1300,00g VE-Wasser

Zulauf 1: Monomerzulauf

600,00 g Styrol

Zulauf 2: Initiatorlösung

120 g Natriumperoxodisulfat, Massekonz. 5 % in Wasser

Nassmusterwerte:

AUZ: analytische Ultrazentrifuge
Feststoffgehalt:: 29,2%
gewichtsmittlere Teilchengröße AUZ: 624nm
Polydispersitätsindex PDI (AUZ): 0,09

B) Herstellung der photonischen Kristalle

Vertikale Ablagerung (Vertical deposition) auf nicht-senkrechtem Substrat durch Evaporation bei Raumtemperatur.
Ein 3x8 cm großer gläserner Objektträger für die Mikroskopie wurde mit Caroscher Säure (H2O2:H2SO4 im Verhältnis 3:7) über Nacht gereinigt und hydrophiliert. Der Objektträger wurde dann in einem Becherglas im 60°-Winkel zur Horizontalen gehalten. Die emulgatorfreie Polymerdispersion wurde mit VE-Wasser auf eine Massenkonzentration von 0,3 % verdünnt und bis zur teilweisen Bedeckung des Objektträgers ins Becherglas gegeben. In einem Wärmeschrank bei 23 °C wurde das Wasser zur Hälfte evaporiert, der Objektträger dann entnommen und vollständig getrocknet.
Der damit hergestellte photonische Kristall wurde mit Rasterkraftmikroskopie (AFM, Asylum MFP3D) abgebildet und weist Bereiche einheitlicher kristalliner fcc-Ordnung in der Ebene der Oberfläche des Trägers auf.
Wird ein Laserstrahl der Wellenlänge 488 nm (wie beschrieben bei García-Santamaría et al., PHYSICAL REVIEW B 71 (2005) 195112) mit einem Durchmesser von 1 mm senkrecht auf die Probe gelenkt, zeigt das Beugungsmuster die Kristallität an.
Die Dicke des photonischen Kristalls auf dem Träger wurde zu 40 $\mu$m bestimmt. In der IR-Transmission zeigt sich ein Stop-Band bei 1400nm mit einer optischen Dichte von 1,7 , das ebenfalls in der IR-Reflexion nachgewiesen wird.

Die Stabilitätsprüfung der Kristalle, die aus diesen Dispersionen hergestellt wurden, sind in der nachfolgenden Tabelle zusammengefasst. Insbesondere in Isopropanol war nach 60 Sekunden eine großflächige Ablösung von Teilen des Kristalls von der Glasunterlage zu erkennen. Die Wechselwirkung der Teilchen untereinander im Kristall war nicht ausreichend stark, um ein Herauslösen dieser großflächigen Teile zu vermeiden.

Unabhängig davon war auch über die Laserbeugung zu erkennen, dass der Grad der Kristallinität mit 70% nicht sehr hoch war, das heißt Anteile von 30% der Fläche amorph waren.

| Beispiel | Zusammensetzung | Wasser | Isopropanol | Laserbeugung | Isopropanol 3 h | Ormorcer isoproanol 1 Tag |
|---|---|---|---|---|---|---|
| R1 | 100pphm Styrol, 1 pphm NaPS 2kg-Ansatz bei 200Upm | nach ca. 60sec AF: kein Ablösen | nach ca. 60sec AF: Ablösen ca. 8mm$^2$ | 70 / 90 | 0% | 0% |

Erläuterungen zur Tabelle:

**AF: Adhäsionsfehler : in Wasser oder in Isopropanol:**

Bruchstücke lösen sich vom Glas oder Bruchstücke lösen sich aus dem Kristall, weil Flüssigkeit unter eine Fehlstelle gelangt, und so von unten den Kristall "sprengt". Von dieser Stelle ausgehend vergrößert sich die Lücke im Kristall.

**CF: Kohäsionsfehler: in Wasser oder in Isopropanol:**

= einzelne Latices lösen sich aus dem Kristall

**Laserbeugung vor der Wasser- oder Lösungsmittelbehandlung**

(Prozentsatz an kristallinen Bereichen/Prozentsatz an monokristallinen fcc)

Es werden zwei Werte durch visuelle Beurteilung ähnlicher Diffraktionsmuster aufgenommen, wenn der Laserstrahl über die gesamte Probe geführt wird:

a) Prozentsatz kristalliner Bereiche (der Wert wird kleiner, wenn amorphe Bereiche vorliegen, identifiziert als Ringstrukturen in der Diffraktion)
b) Prozensatz an monokristallinen fcc (hexagonales Diffraktionsmuster in den kristallinen Bereichen (der Wert vermindert sich, wenn die winkelabhängige Orientierung sich ändert oder falls kubische (90°) Muster vorliegen, was eine < 100 >-Schichtorientierung anzeigt)).

Eine perfekte Probe hat die Zahlenwerte 100/100, eine amorphe Probe hat die Zahlenwerte 0/-.

Darüber hinaus wurden Infiltrationsexperimente durchgeführt mit Isopropanol für drei Stunden bzw. Ormorcer® und Isopropanol für einen Tag: Um eine Struktur (Defekt) in den Kolloidkristall einzuschreiben, muss ein Photoresist (oder Material mit passendem Index) infiltriert werden. Nachdem die Defekte mit einem Laser eingeschrieben sind, muss das Material darauffolgend entfernt werden. Bei diesem Entfernungsprozess löst sich der Kolloidkristall vom Substrat.

Zwei Tests wurden für jeden Probentyp durchgeführt, entsprechend dem notwendigen Handling-Vorgehen zur Entfernung des infiltrierten Materials, in diesem Fall einem Ormocer®.

Test 1 Plazieren der Probe in einem Isopropanol-Bad unter geringem Rühren (100 U/min) für eine Zeit von drei Stunden

Test 2 Infiltration des Photoresists über drei Tage bei Raumtemperatur. Sodann wurden Proben in ein Isopropanolbad für einen Tag gegeben, wobei gelegentlich Isopropanol ersetzt wurde. Die angegebenen Zahlenwerte geben die prozentual abgelöste Fläche an.

Bei Ormocer®, *micro resist technology* GmbH, Köpenicker Str. 325, D-12555 Berlin handelt es sich um ein anorganisch-organische Hybridpolymere. Bedingt durch dieses anorganisch-organische Netzwerk liegen die Materialeigenschaften der ORMOCER® wie z.B. Härte, Temperatur- und chemische Stabilität zwischen denen von anorganischen Keramiken bzw. Gläsern und denen von organischen Polymeren. Der Brechungsindex kann den jeweiligen Bedürfnissen angepasst und in weiten Bereichen variiert werden. Die gewünschten ORMOCER®-Strukturen sind durch Photostrukturierung zu erzeugen.

**Referenzbeispiel 2**

**Emulgatorfreie Emulsionspolymerisation und Quellungspolymerisation**

In einem Reaktor mit Ankerrührer, Thermometer, Gaseintrittsrohr, Beschickungsrohren und Rückflusskühler wurden zunächst 764,47 g Wasser vorgelegt. Der Kolbeninhalt wurde anschließend erhitzt und bei einer Drehzahl von 200 min-1 gerührt. Während dieser Zeit wurde dem Reaktor Stickstoff zugeführt. Bei Erreichen einer Temperatur von 85°C wurde die Stickstoffzufuhr eingestellt und vermieden, dass Luft in den Reaktor gelangte. Dann wurden dem Reaktor 10% vom Monomerzulauf, bestehend aus 350g Styrol, und 10% einer Kaliumperoxodisulfatlösung aus 1,74g Kaliumperoxodisulfat in 56,26 g Wasser zugeführt und 5 Minuten lang voroxidiert, dann wurde der Rest Kaliumperoxodisulfatlösung innerhalb von 3 Stunden zugesetzt. Zeitgleich wurde der Rest des Monomerzulaufs 3 Stunden lang zudosiert. Nach Monomer- und Kaliumperoxodisulfatiösungzulauf-Ende wurde die Dispersion weitere 3 Stunden bei 85°C gerührt. Danach wurde die Dispersion auf Raumtemperatur gekühlt.

Von dieser Dispersion wurden 282,69g in einem Reaktor mit Ankerrührer, Thermometer, Gaseintrittsrohr, Beschickungsrohren und Rückflusskühler und 927,01g Wasser, 1,07g Texapon® NSO (28%ig in Wasser) und 120g Styrol vorgelegt. Der Kolbeninhalt wurde dann für 24 Stunden bei Raumtemperatur bei einer Drehzahl von 150 min-1 gerührt und anschließend erhitzt. Während dieser Zeit wurde dem Reaktor Stickstoff zugeführt. Bei Erreichen einer Temperatur von 75°C wurde die Stickstoffzufuhr eingestellt und vermieden, dass Luft in den Reaktor gelangte. Dann wurde dem Reaktor eine Natriumperoxodisulfatlösung aus 0,6g Natriumperoxodisulfat in 7,97 g Wasser zugeführt, und es wurde für 7 Stunden auspolymerisiert. Danach wurde die Dispersion auf Raumtemperatur abgekühlt.

Von dieser Dispersion wurden 642,86g in einem Reaktor mit Ankerrührer, Thermometer, Gaseintrittsrohr, Beschickungsrohren und Rückflusskühler und 462,70g Wasser, 0,8g Texapon NSO (28%ig in Wasser) und 90g Styrol vorgelegt. Der Kolbeninhalt wurde dann 24 Stunden bei Raumtemperatur bei einer Drehzahl von 150 min-1 gerührt und anschließend erhitzt. Während dieser Zeit wurde dem Reaktor Stickstoff zugeführt. Bei Erreichen einer Temperatur von 75°C wurde die Stickstoffzufuhr eingestellt und vermieden, dass Luft in den Reaktor gelangte. Dann wurde dem Reaktor eine Natriumperoxodisulfatlösung aus 0,67g Natriumpersulfat in 8,97 g Wasser zugeführt und 7 Stunden auspolymerisiert. Danach wurde die Dispersion auf Raumtemperatur abgekühlt.

Die Zusammensetzung der Zuläufe war wie folgt:

1.Stufe:
Vorlage:
764,47g          VE-Wasser

Zulauf 1: Monomerzulauf
350,00 g         Styrol

Zulauf 2: Initiatorlösung
58 g             Kaliumperoxodisulfat, Massekonz. 3 % in Wasser
2.Stufe:
Vorlage:
927,01 g         VE-Wasser
282,69 g         Saat (Polystyrolteilchen aus 1.Stufe), Massekonz.: 28,3 % in Wasser
1,07 g           Texapon NSO, Massekonz.: 28 % in Wasser
120,00 g         Styrol

Zulauf 1: Initiatorlösung
8,57 g           Natriumperoxodisulfat, Massekonz. 7 % in Wasser

(fortgesetzt)

| | |
|---|---|
| 3.Stufe: | |
| Vorlage: | |
| 462,70 g | VE-Wasser |
| 642,86 g | Saat (Polystyrolteilchen aus 2.Stufe), Massekonz.: 14 % in Wasser |
| 0,80 g | Texapon NSO, Massekonz.: 28 % in Wasser |
| 90,00 g | Styrol |
| | |
| Zulauf 1: Initiatorlösung | |
| 9,64 g | Natriumperoxodisulfat, Massekonz. 7 % in Wasser |
| | |
| Nassmusterwerte: | |
| Feststoffgehalt:: | 14,6% |
| AUZ: | 963nm |
| PDI (AUZ): | 0,06 |

,Die erhaltenen Polymerteilchen hatten eine gewichtsmittlere Teilchengröße von 963 nm und einen Polydispersitätsindex von 0,06

Die Stabilitätsprüfung der Kristalle, die aus diesen Dispersionen hergestellt wurden, ergaben vergleichbar negative Werte wie in Referenzbeispiel 1. Insbesondere in Isopropanol war nach 60 Sekunden eine großflächige Ablösung von Teilen des Kristalls von der Glasunterlage zu erkennen. Die Wechselwirkung der Teilchen untereinander im Kristall war nicht ausreichend stark, um ein Herauslösen dieser großflächigen Teile zu vermeiden.

Über die Laserbeugung war zu erkennen, dass der Grad der Kristallinität, etwa 60 %, sogar noch geringer als im vorhergehenden Referenzbeispiel 1 war, das heißt Anteile von 40% der Fläche amorph waren.

**Beispiele 3 Quellung + Reaktives Monomer auf der Oberfläche**

In einem Reaktor mit Ankerrührer, Thermometer, Gaseintrittsrohr, Beschickungsrohren und Rückflusskühler wurden zunächst 1928,33 g Wasser vorgelegt. Der Kolbeninhalt wurde anschließend erhitzt und bei einer Drehzahl von 200 min-1 gerührt. Während dieser Zeit wurde dem Reaktor Stickstoff zugeführt. Bei Erreichen einer Temperatur von 85°C wurde die Stickstoffzufuhr eingestellt, und es wurde vermieden, dass Luft in den Reaktor gelangte. Dann wurden dem Reaktor 10% vom Monomerzulauf, bestehend aus 890 g Styrol, und 10% einer Natriumperoxodisulfatlösung aus 8,9 g Natriumperoxodisulfat in 169,1 g Wasser zugeführt und 5 Minuten lang voroxidiert, dann wurde der Rest Natriumperoxodisulfatlösung innerhalb von 3 Stunden zugesetzt. Zeitgleich wurde der Rest des Monomerzulaufs 3 Stunden lang zudosiert. Nach Monomer- und Natriumperoxodisulfatlösungzulauf-Ende wurde die Dispersion für weitere 3 Stunden bei 85°C gerührt. Danach wurde die Dispersion auf Raumtemperatur gekühlt.

Von dieser Dispersion wurden 671,30g in einem Reaktor mit Ankerrührer, Thermometer, Gaseintrittsrohr, Beschickungsrohren und Rückflusskühler und 2127,84g Wasser, 2,59g Texapon NSO (28%ig in Wasser) und 290g Styrol vorgelegt. Der Kolbeninhalt wurde dann 24 Stunden bei Raumtemperatur bei einer Drehzahl von 150 min-1 gerührt und anschließend erhitzt. Während dieser Zeit wurde dem Reaktor Stickstoff zugeführt. Bei Erreichen einer Temperatur von 75°C wurde die Stickstoffzufuhr eingestellt und vermieden, dass Luft in den Reaktor gelangte. Dann wurde dem Reaktor über 5 Stunden eine Natriumperoxodisulfatlösung aus 1,45g Natriumpersulfat in 143,55 g Wasser zugeführt und 2 Stunden bei 75°C auspolymerisiert. Danach wurde die Dispersion auf Raumtemperatur abgekühlt.

Von dieser Dispersion wurden 600 g in einem Reaktor mit Ankerrührer, Thermometer, Gaseintrittsrohr, Beschickungsrohren und Rückflusskühler und 458,50 g Wasser, 0,8 g Texapon® NSO (28%ig in Wasser), 86,40g Styrol, 12,00g N-Methylolmethacrylamid (15%ig in Wasser) und 1,8g Divinylbenzol vorgelegt. Der Kolbeninhalt wurde dann für 24 Stunden bei Raumtemperatur bei einer Drehzahl von 150 min-1 gerührt und anschließend erhitzt. Während dieser Zeit wurde dem Reaktor Stickstoff zugeführt. Bei Erreichen einer Temperatur von 75°C wurde die Stickstoffzufuhr eingestellt, und es wurde vermieden, dass Luft in den Reaktor gelangte. Dann wurde dem Reaktor über 5 Stunden eine Natriumperoxodisulfatlösung aus 0,45 g Natriumperoxodisulfat in 44,55 g Wasser zugeführt, und es wurde für 2 Stunden bei 75°C auspolymerisiert. Danach wurde die Dispersion auf Raumtemperatur abgekühlt.

Die Zusammensetzung der Zuläufe war wie folgt:

| | |
|---|---|
| Vorlage: | |
| 1928,33g | VE-Wasser |

(fortgesetzt)

Vorlage:

Zulauf 1: Monomerzulauf
890,00 g                     Styrol

Zulauf 2: Initiatorlösung
178,00 g                     Natriumperoxodisulfat, Massekonz. 5 % in Wasser

2.Stufe:
Vorlage:
2127,84 g                    VE-Wasser
671,30 g                     Saat (Polystyrolteilchen aus 1.Stufe), Massekonz.: 28,8 % in Wasser
2,59 g                       Texapon NSO, Massekonz.: 28 % in Wasser
290,00 g                     Styrol

Zulauf 1: Initiatorlösung
145,00 g                     Natriumperoxodisulfat, Massekonz. 1 % in Wasser

3.Stufe:
Vorlage:
458,50 g                     VE-Wasser
600,00 g                     Saat (Polystyrolteilchen aus 2.Stufe), Massekonz.: 14,3 % in Wasser
0,80 g                       Texapon NSO, Massekonz.: 28 % in Wasser
86,40 g                      Styrol
12,00g                       N-Methylolmethacrylamid, Massekonz.: 15 % in Wasser
1,80g                        Divinylbenzol

Zulauf 1: Initiatorlösung
45,00 g                      Natriumperoxodisulfat, Massekonz. 1 % in Wasser

Nassmusterwerte:
Feststoffgehalt::   13,8%
AUZ:                905nm
PDI (AUZ):          0,17

*Teilchen mit reaktiven Oberflächen*

| Beispiel- | Probe aus Bsp./Wärmebehandlung | Morphologie | Analog Beispiel 3 außer Zusammensetzung 3. Stufe | Wasser | Isopropanol | Laserbeugung | LZH Isopropanol 3 h | LZH Ormorcer Isoproanol 1 Tag |
|---|---|---|---|---|---|---|---|---|
| 9 | unbehandelt | reactive surface | 98pphm Styrol, 2pphm MAMol, 0,25pphm Texapon NSO, 0,5pphm NaPS, Saat | nach 60sec AF: ca. 5mm$^2$ von Fehlstelle ausgehend | nach 60 sec CF: keine Schlieren | 95 / 90 | 0% | 0% |
| 10 | 9 1h bei 100°C | reactive surface activated | | nach 30 sec AF: Beginn des Ablösens am Meniskus nach 60sec ca. 8mm$^2$ | nach 60 sec AF: kein Ablösen CF: 0 bis 40sec Schlierenbildung | 95 / 90 | 90% | 80% |
| 1.1 | 3 unbehandelt | reactive surface | 98pphm Styrol, 2pphm AMol, 0,25pphm Texapon NSO, 0,5pphm NaPS, Saat | nach 30sec AF: ca. 1-5mm$^2$ | nach 5sec CF: leichte Schlieren - keine Trübung nach 1 min keine weiteren Schlieren | 90 / 90 | 0% AF: 1 mm$^2$ | 0% |
| 12 | 11 1h bei 100°C | reactive surface activated | | nach 60 sec keine Veränderung | nach 5sec bis ca. 30sec CF: leichte Schlieren danach keine weiteren Schlieren | 90 / 90 | 95% | 60% |
| 13 | 3 unbehandelt | reactive surface | 96pphm Styrol, 2pphm MA-Mol, 2pphm DVB, 0,25pphm Texapon NSO, 0,5pphm NaPS, Saat | nach 60sec AF: kein Ablösen | nach 60 sec AF: kein Ablösen | 95 / 90 | 0% | 0% |

| Beispiel- | Probe aus Bsp./Wärmebehandlung | Morphologie | Analog Beispiel 3 außer Zusammensetzung 3. Stufe | Wasser | Isopropanol | Laserbeugung | LZH Isopropanol 3 h | LZH Ormorcer Isoproanol 1 Tag |
|---|---|---|---|---|---|---|---|---|
| 14 | 13 1h bei 100°C | reactive surface activated | | nach 60sec AF: kein Ablösen | nach 60 sec AF: kein Ablösen CF: keine Schlierenbildung | 80 / 90 | 95% | 90% |
| 3 | unbehandelt | reactive surface | 96pphm Styrol, 2pphm MAMol, 2pphm DVB 0,25pphm Texapon NSO, 1pphm NaPS, 0.25pphm Lutavit C, Saat Polyt.: 60°C | nach 60sec AF: kein Ablösen | nach 60 sec AF: kein Ablösen CF: keine Schlierenbildung | 95 / 90 | 95% | 60% 1d ISO bei GKP 50% |
| 4 | 3. 1h bei 100°C | reactive surface activated | | nach 60sec AF: kein Ablösen | nach 60 sec AF: kein Ablösen CF: keine Schlierenbildung | 90 / 90 | 100% | 100% 1d ISO bei GKP 100% |
| 5 | 3 24h bei 90°C | reactive surface activated | | nach 60sec AF: kein Ablösen | nach 60 sec AF: kein Ablösen CF: keine Schlierenbildung | 90 / 90 | 100% | 1 d ISO bei GKP 100% |
| 6 | 3 6h bei 95°C | reactive surface activated | Laserbeugung: für Eintauchtest Reproduktions-Proben mit zum Teil kleinerer Kristallfläche ((A<90)/90) | nach 60sec AF: kein Ablösen | nach 60 sec AF: kein Ablösen CF: keine Schlierenbildung | 90 / 90 | 100% | 100% |
| 7 | 3 3h bei 100°C | reactive surface activated | | nach 60sec AF: kein Ablösen | nach 60 sec AF: kein Ablösen CF: keine Schlierenbildung | 90 / 90 | 100% | 100% |

(fortgesetzt)

| Beispiel- | Probe aus Bsp./Wärmebehandlung | Morphologie | Analog Beispiel 3 außer Zusammensetzung 3. Stufe | Wasser | Isopropanol | Laserbeugung | LZH Isopropanol 3 h | LZH Ormorcer Isoproanol 1 Tag |
|---|---|---|---|---|---|---|---|---|
| 8 | 3 2h bei 100°C | reactive surface activated | | nach 60sec AF: kein Ablösen | nach 60 sec AF: kein Ablösen  CF: keine Schlierenbildung | 90 / 90 | 100% | 100% |
| 15 | 3 unbehandelt | | 98pphm Styrol, 2pphm DAAM, 0,25pphm Texapon NSO, 0,5pphm NaPS, Saat, Polytemp. 75°C | nach ca. 60sec CF: Probe löst sich auf, Wasser wird trüb | nach ca. 60sec AF: Ablösen ca. 8mm$^2$ | 70 / 90 | 0% | 0% |
| 16 | 15 + ADDH Verhältnis von DAAM : ADDH = 2:1 | | | nach 60sec AF: kein Ablösen | nach 60 sec AF: kein Ablösen  CF: keine Schlierenbildung | 70 / 90 | 100% | 100% |
| 17 | 15 + ADDH Verhältnis von DAAM : ADDH = 4:1 | | | nach 60sec AF: kein Ablösen | nach 60 sec AF: kein Ablösen  CF: keine Schlierenbildung | 70 / 90 | 100% | 90% |
| 18 | 15 + ADDH Verhältnis von DAAM : ADDH = 6:1 | | | nach 60sec AF: kein Ablösen | nach 60 sec AF: kein Ablösen  CF: keine Schlierenbildung | 70 / 90 | 90% | 80% |
| 19 | 15 | | | nach 60sec | nach 60 sec | 70/90 | 80% | 60% |

(fortgesetzt)

| Beispiel- | Probe aus Bsp./Wärmebehandlung | Morphologie | Analog Beispiel 3 außer Zusammensetzung 3. Stufe | Wasser | Isopropanol | Laserbeugung | LZH Isopropanol 3 h | LZH Ormorcer Isoproanol 1 Tag |
|---|---|---|---|---|---|---|---|---|
| | + ADDH Verhältnis von DAAM : ADDH = 8:1 | | | AF: kein Ablösen | AF: kein Ablösen<br><br>CF: keine Schlierenbildung | | | |
| 20 | 3<br>+ 0,5 Teile Melaminformaldehyd-Oligomer | | 95pphm Styrol, 5pphm HEA, 0,25pphm Texapon NSO, 0,5pphm NaPS, Saat | nach 60sec AF: kein Ablösen | nach 60 sec AF: kein Ablösen<br><br>CF: keine Schlierenbildung | 80/70 | 100% | 70% |
| 21 | 3<br>+2 Teile (fest auf fest) Melaminformaldehyd-Oligomer Luwipal® | | 95pphm Styrol, 5pphm HPA, 0,25pphm Texapon NSO, 0,5pphm NaPS, Saat | nach 60sec AF: kein Ablösen | nach 60 sec AF: kein Ablösen<br><br>CF: keine Schlierenbildung | 80 / 70 | 90% | 80% |
| 22 | 3<br>+4 Teile (fest auf fest) Melaminformaldehyd-Oligomer Luwipal® | | 96pphm Styrol, 4pphm AS, 0,25pphm Texapon NSO, 0,5pphm NaPS, Saat | nach 60sec AF: kein Ablösen | nach 60 sec AF: kein Ablösen<br><br>CF: keine Schlierenbildung | 80/70 | 100% | 90% |
| 23 | 3<br>+6 Teile (fest auf fest) Melaminformaldehyd-Oligomer Luwipal® | | 96pphm Styrol, 4pphm MAS, 0,25pphm Texapon NSO, 0,5pphm NaPS, Saat | nach 60sec AF: kein Ablösen | nach 60 sec AF: kein Ablösen<br><br>CF: keine Schlierenbildung | 80/70 | 100% | 90% |
| 24 | 3<br>+ Di-Natriumtetraborat (das molare Verhätnis von der HEA : DiNatriumtetraborat = 2:1) | | 95pphm Styrol, 5pphm HEA, 0,25pphm Texapon NSO, 0,5pphm NaPS, Saat | nach 60sec AF: kein Ablösen | nach 60 sec AF: kein Ablösen<br><br>CF: keine Schlierenbildung | 90/80 | 100% | 90% |

(fortgesetzt)

| Beispiel- | Probe aus Bsp./Wärmebehandlung | Morphologie | Analog Beispiel 3 außer Zusammensetzung 3. Stufe | Wasser | Isopropanol | Laserbeugung | LZH Isopropanol 3 h | LZH Ormorcer Isoproanol 1 Tag |
|---|---|---|---|---|---|---|---|---|
| 25 | 3 <br>+ Di-Natriumtetraborat (das molare Verhätnis von der HPA : DiNatriumtetraborat = 2:1) | | 95pphm Styrol, 5pphm HPA, 0,25pphm Texapon NSO, 0,5pphm NaPS, Saat | nach 60sec AF: kein Ablösen | nach 60 sec AF: kein Ablösen<br><br>CF: keine Schlierenbildung | 90 / 80 | 90% | 70% |
| 26 | 3 <br>+ Di-Natriumtetraborat (das molare Verhätnis von der AS : DiNatriumtetraborat = 2:1) | | 96pphm Styrol, 4pphm AS, 0,25pphm Texapon NSO, 0,5pphm NaPS, Saat Polyt.: 75°C | nach 60sec AF: kein Ablösen | nach 60 sec AF: kein Ablösen<br><br>CF: keine Schlierenbildung | 60/90 | 100% | 80% |
| 27 | 3 <br>+ Di-Natrium-tetraborat<br><br>(das molare Verhätnis von der MAS : DiNatriumtetraborat = 2:1) | | 96pphm Styrol, 4pphm MAS,<br><br>0,25pphm Texapon NSO, 0,5pphm NaPS, Saat Polyt.: 75°C | nach 60sec AF: kein Ablösen | nach 60 sec AF: kein Ablö-sen<br><br>CF: keine Schlierenbildung | 60/90 | 100% | 90% |

Die Herstellung der in den Tabellen genannten Beispiele ist bis zur 2. Stufe immer gleich, nur die Zusammensetzung der 3.Stufe wurde geändert.

**Vernetzer:** Kristalle der Dispersionen aus Beispiel 13 und 14 und Beispiel 3 bis 8 mit Vernetzer (je 2pphm MAMOL und DVB) zeigen eine deutlich bessere Stabilität gegenüber Wasser und Isopropanol.

Es wurde gefunden, dass Tempern bei 95°C für sechs Stunden oder bei 90°C für 24 Stunden ausreichend ist, um ein Verbrücken und eine gute Isopropanol-Widerstandsfähigkeit zu erreichen, verbunden mit stark verminderten Cracking-Effekten. Auch Tempern bei 95°C für eine Stunde führte bereits zu einer wesentlich verbesserten Widerstandsfähigkeit im Vergleich zu den nicht reaktiven Proben.

**Beispiele 28 - 33: Teilchen mit Säure auf der Oberfläche**

| Beispiel- | Probe aus Bsp./Wärmebehandlung | Morphologie | Analog Beispiel 3 außer Zusammensetzung 3. Stufe | Wasser | Isopropanol | Laserbeugung | Isopropanol 3h | Ormorcer Isopro-panol 1 Tag |
|---|---|---|---|---|---|---|---|---|
| 28 | unbeha ndelt | | 98pphm Styrol, 2pphm MAS, 0,75pphm NaPS, Saat | sofort: CF/AF : Kris-tall löst sich komplett im Wasser auf Wasser wird trüb | nach 1 min kein Ablösen oder Schlieren AF: am Meniskus ist ein Ablösen zu sehen freies Glas wird sichtbar | 60/90 | 90% AF: 1mm$^2$ | 50% |
| 29 | 28 24h bei 90°C | tempered | | nach ca. 25sec CF: Probe löst sich auf, Wasser wird trüb | nach 5 bis 30sec CF: Schlierenbildung nach 1 min AF: am Meniskus ist ein Ablösen zu sehen 1mm$^2$ | 70/90 | 100% | 80% |
| 30 | 0.001% Amino-Methyl-Silan 24h bei 90°C | Silancoupling agent + tempered**) | | nach ca. 60sec AF: ca. 1mm$^2$ | nach 20 bis 30sec CF: Schlierenbildung AF: auch nach 60sec kein Ablösen | 50/90 | 100% | 90% |
| 31 | | | 96pphm Styrol, 4pphm MAS, 0,25pphm Texapon NSO, 0,5pphm NaPS Saat Polyt.: 75°C | sofort: CF/AF : Kristall löst sich komplett im Wasser auf Wasser wird trüb | nach 1 min kein Ablösen oder Schlieren AF: am Meniskus ist ein Ablösen zu sehen freies Glas wird sichtbar | 60/90 | 90% AF: 1mm$^2$ | 50% |

(fortgesetzt)

| Beispiel- | Probe aus Bsp./Wärmebehandlung | Morphologie | Analog Beispiel 3 außer Zusammensetzung 3. Stufe | Wasser | Isopropanol | Laserbeugung | Isopropanol 3h | Ormorcer Isopro-panol 1 Tag |
|---|---|---|---|---|---|---|---|---|
| 32 | | | 50pphm Styrol, 50pphm t-BA, 0,25pphm Texapon NSO, 1pphm NaPS, 0.25pphm Lutavit C, Saat Polytemperatur.: 60°C | | nach 60 sec AF: kein Ablösen CF: keine Schlierenbildung | 30/90 | 50% | 20% |
| 33 | | | 50pphm Styrol, 50pphm t-BA, 0,25pphm<br><br>Texapon NSO, 1pphm NaPS, 0.25pphm Lutavit C, Saat Polytemperatur.: 60°C, danach 5h bei 95°C gerührt um aus t-BA Acrylsäure herzustellen | | nach 60 sec AF: kein Ablösen CF: keine Schlierenbildung | 70/80 | 90% | 80% |
| t-BA = tert.-Butylacrylat<br>**)glasbeschichtet mit Amino-Methyl-Silan (keine lange Alkylkette) in der Gasphase = Monolayer, | | | | | | | | |

Zu Beispiel 28/29:

Im Gegensatz zu den anderen Dispersionen hat diese mit 2pphm MAS einen sehr gut wasserlöslichen Anteil in der Schale. Dadurch löst sich der Kristall sehr gut im Wasser auf. Durch die Temperierung kann dieses Auflösen verlangsamt werden, vermutlich durch interpartikuläre Anhydrid-Bildung.

Unterhalb von 90°C ist die Anhydridbildung der interpartikulären Vernetzung zwar vorhanden aber noch nicht optimal, oberhalb von 90°C beginnt das Teilchen aus Polystyrol zu erweichen, und der für die Invertierung des photonischen Kristalls erforderliche Hohlraum zwischen den Kugeln geht verloren.

Deshalb ist das Ergebnis der Stabilisierung des Kristalls bei 90°C optimal.

Die Beugungsbilder des Einkristalls wurden mit einem bis zu 1,8 cm aufgeweiteten Laserstrahl aufgenommen. Die gleichbleibenden Streumuster bei zunehmender Strahlaufweitung belegen, dass es sich bei der 2cm x 2cm großen Fläche um einen Einkristall handelt.

**Beispiele 34 - 37 Teilchen mit Salzvernetzung mit Zink**

| Beispiel | Probe aus Bsp./Salz | Morphologie | Analog Beispiel 3 außer Zusammensetzung 3. Stufe | Wasser | Isopropanol | Laserbeugung | Isopropanol 3 h | Ormorcer Isoproanol 1 Tag |
|---|---|---|---|---|---|---|---|---|
| 34 | 3 +ZnCl$_2$ | | 96pphm Styrol, 4pphm AS, 0,25pphm Texapon NSO, 0,5pphm NaPS, Saat Polyt.: 75°C | sofort: CF/AF: Kristall löst sich komplett im Wasser auf Wasser wird trüb | nach 1min kein Ablösen oder Schlieren AF: am Meniskus ist ein Ablösen zu sehen freies Glas wird sichtbar | 60/90 | 30% AF: 1mm$^2$ | 10% |
| 35 | 3 + Zn(Nh$_3$)$_4$(HCO$_3$)$_2$-Lsg. + 2% Texapon NSO (AS/Zn-Komplex, ohne Tempern) | | | nach ca. 25sec CF: Probe löst sich auf, Wasser wird trüb | nach 5 bis 30sec CF: Schlierenbil-dung nach 1 min | 70/90 | 100% | 80% |
| 36 | 31 + Zn(NH$_3$)$_4$(HCO$_3$)$_2$-Lsg. + 2% Texapon NSO (AS / Zn-Komplex, ohne Tempern) | - | 96pphm Styrol, 4pphm MAS, 0,25pphm Texapon NSO, 0,5pphm NaPS, Saat Polyt.: 75°C | nach ca. 20sec CF: Probe löst sich auf, Wasser wird trüb | nach 5 bis 30sec CF: Schlierenbil-dung nach 1 min | 60/90 | 100% | 90% |
| 37 | 3 + Zn(NH$_3$)$_4$(HCO$_3$)$_2$-Lsg. + 2% Texapon NSO (AS / Zn-Komplex ohne Tempern) | | 50pphm Styrol, 50pphm t-BA, 0,25pphm Texapon NSO, 1 pphm NaPS, 0.25pphm Lutavit C, Saat Polytemperatur.: 60°C, danach 5h bei 95°C gerührt um aus t-BA Acrylsäure herzustellen | nach ca. 25sec CF: Probe löst sich auf, Wasser wi rd trüb b | nach 5 bis 30sec CF: Schlierenbil-dung nach 1 min | 70/90 | 100% | 90% |
| AS = Acrylsäure | | | | | | | | |

Zur Vernetzung wird eine Zink-Lsg bestehend aus 16% $NH_3$, 12% $NH_4HCO_3$ und 7% ZnO herangezogen.

Die Einsatzstoffe bilden daraus einen Komlex $Zn(NH_3)_4(HCO_3)_2$. Das Carbonat ist ein schwächeres Ion als die Carboxylgruppe der Säure, somit lagert sich das $Zn^{2+}$ an diesem. Beim Trocknen des Films verflüchtigen sich der Ammoniak und das $CO_2$.

Die Dispersionen wurden mit 2% Texapon® NSO stabilisiert, danach mit Ammoniak auf $p^h = 8$ gestellt, und dann wurde der Komplex zugegeben.

**Beispiel 38 Quellung + polares Monomer auf der Oberfläche**

In einem Reaktor mit Ankerrührer, Thermometer, Gaseintrittsrohr, Beschickungsrohren und Rückflusskühler wurden zunächst 1928,33 g Wasser vorgelegt. Der Kolbeninhalt wurde anschließend erhitzt und bei einer Drehzahl von 200 min-1 gerührt. Während dieser Zeit wurde dem Reaktor Stickstoff zugeführt. Bei Erreichen einer Temperatur von 85°C wurde die Stickstoffzufuhr eingestellt, und es wurde vermieden, dass Luft in den Reaktor gelangte. Dann wurden dem Reaktor 10% vom Monomerzulauf, bestehend aus 890 g Styrol, und 10% einer Natriumperoxodisulfatlösung aus 8,9 g Natriumperoxodisulfat in 169,1 g Wasser zugeführt und 5 Minuten lang voroxidiert, dann wurde der Rest Natriumperoxodisulfatlösung innerhalb von 3 Stunden zugesetzt. Zeitgleich wurde der Rest des Monomerzulaufs 3 Stunden lang zudosiert. Nach Monomer- und Natriumperoxodisulfatlösungzulauf Ende wurde die Dispersion für weitere 3 Stunden bei 85°C gerührt. Danach wurde die Dispersion auf Raumtemperatur gekühlt.

Von dieser Dispersion wurden 671,30g in einem Reaktor mit Ankerrührer, Thermometer, Gaseintrittsrohr, Beschickungsrohren und Rückflusskühler und 2127,84g Wasser, 2,59g Texapon® NSO (28%ig in Wasser) und 290 g Styrol vorgelegt. Der Kolbeninhalt wurde dann 24 Stunden bei Raumtemperatur bei einer Drehzahl von 150 min-1 gerührt und anschließend erhitzt. Während dieser Zeit wurde dem Reaktor Stickstoff zugeführt. Bei Erreichen einer Temperatur von 75°C wurde die Stickstoffzufuhr eingestellt und vermieden, dass Luft in den Reaktor gelangte. Dann wurde dem Reaktor über 5 Stunden eine Natriumperoxodisulfatlösung aus 1,45 g Natriumperoxodisulfat in 143,55 g Wasser zugeführt und 2 Stunden bei 75°C auspolymerisiert. Danach wurde die Dispersion auf Raumtemperatur abgekühlt.

Von dieser Dispersion wurden 600 g in einem Reaktor mit Ankerrührer, Thermometer, Gaseintrittsrohr, Beschickungsrohren und Rückflusskühler und 468,70 g Wasser, 0,8g Texapon NSO (28%ig in Wasser), 85,50 g Styrol und 4,5 g Butandiolmonoacrylat vorgelegt. Der Kolbeninhalt wurde dann 24 Stunden bei Raumtemperatur bei einer Drehzahl von 150 min-1 gerührt und anschließend erhitzt. Während dieser Zeit wurde dem Reaktor Stickstoff zugeführt. Bei Erreichen einer Temperatur von 75°C wurde die Stickstoffzufuhr eingestellt, und es wurde vermieden, dass Luft in den Reaktor gelangte. Dann wurde dem Reaktor über 5 Stunden eine Natriumperoxodisulfatlösung aus 0,45 g Natriumperoxodisulfat in 44,55 g Wasser zugeführt und 2 Stunden bei 75°C auspolymerisiert. Danach wurde die Dispersion auf Raumtemperatur abgekühlt.

Die Zusammensetzung der Zuläufe war wie folgt:

Vorlage:
1928,33g          VE-Wasser

Zulauf 1: Monomerzulauf
890,00 g          Styrol

Zulauf 2: Initiatorlösung
178,00 g          Natriumperoxodisulfat, Massekonz. 5 % in Wasser

2.Stufe:
Vorlage:
2127,84 g          VE-Wasser
671,30 g          Saat (Polystyrolteilchen aus 1.Stufe), Massekonz.: 28,8 % in Wasser
2,59 g          Texapon NSO, Massekonz.: 28 % in Wasser
290,00 g          Styrol
Zulauf 1: Initiatorlösung
145,00 g          Natriumperoxodisulfat, Massekonz. 1 % in Wasser

(fortgesetzt)

3.Stufe:
Vorlage:
468,70 g          VE-Wasser
600,00 g          Saat (Polystyrolteilchen aus 2.Stufe), Massekonz.: 14,3 % in Wasser
0,80 g            Texapon NSO, Massekonz.: 28 % in Wasser
85,50 g           Styrol
4,50g             Butandiolmonoacrylat

Zulauf 1: Initiatorlösung
45,00 g           Natriumperoxodisulfat, Massekonz. 1 % in Wasser

Nassmusterwerte:
Feststoffgehalt::   13,9%
AUZ:               880nm
**PDI (AUZ):        0,27**

*Teilchen mit polarer Oberfläche*

| Beispiel | Probe aus Bsp./ Wärmebehandlung | Morphologie | Analog Beispiel 38 außer Zusammensetzung 3. Stufe | Wasser | Isopropanol | Laserbeugung | Isopropanol 3 h | Ormorcer Isoproanol 1 Tag |
|---|---|---|---|---|---|---|---|---|
| 39 | unbehandelt | sticky shell | 95pphm Styrol, 5pphm HEA, 0,25pphm Texapon NSO, 0,5pphm NaPS, Saat | nach 60sec AF: kein Ablösen | nach 60 sec AF: kein Ablösen CF: keine Schlierenbildung | 95 / 85 | 50% AF: 1mm$^2$ | 80% |
| 40 | 39 1h bei 100°C | | | nach 60sec AF: kein Ablösen | nach 60 sec AF: kein Ablösen CF: keine Schlierenbildung | 85/85 | | |
| 38 | unbehandelt | Cross linker | 95pphm Styrol, 5pphm BDA, 0,25pphm Texapon NSO, 0,5pphm NaPS, Saat BDA(Butandiolmon oacrylat) | | nach 60 sec AF: kein Ablösen CF: keine Schlierenbildung | 60/90 | 100% | 100% |
| 41 | unbehandelt | sticky shell | 95pphm Styrol, 5pphm HPA, 0,25pphm Texapon NSO, 0,5pphm NaPS, Saat | | | 90/90 | 50% AF: 1mm$^2$ | 40% |

Die polare Oberfläche der Teilchen führt zu einer physikalischen (oder auch chemischen) Wechselwirkung der Teilchen, die bereits ohne Tempern die Stabilität des Kristalls extrem erhöht und die Werte der reaktiven getemperten Proben erreicht.

**Beispiel 42: Weiche Oberfläche**

In einem Reaktor mit Ankerrührer, Thermometer, Gaseintrittsrohr, Beschickungsrohren und Rückflusskühler wurden zunächst 1928,33 g Wasser vorgelegt. Der Kolbeninhalt wurde anschließend erhitzt und bei einer Drehzahl von 200 min-1 gerührt. Während dieser Zeit wurde dem Reaktor Stickstoff zugeführt. Bei Erreichen einer Temperatur von 85°C wurde die Stickstoffzufuhr eingestellt, und es wurde vermieden, dass Luft in den Reaktor gelangte. Dann wurden dem Reaktor 10% vom Monomerzulauf, bestehend aus 890g Styrol, und 10% einer Natriumperoxodisulfatlösung aus 8,9 g Natriumperoxodisulfat in 169,1 g Wasser zugeführt, und 5 Minuten lang voroxidiert, dann wurde der Rest Natriumperoxodisulfatlösung innerhalb von 3 Stunden zugesetzt. Zeitgleich wurde der Rest des Monomerzulaufs 3 Stunden lang zudosiert. Nach Monomer- und Natriumperoxodisulfatlösungzulauf Ende wurde die Dispersion für weitere 3 Stunden bei 85°C gerührt. Danach wurde die Dispersion auf Raumtemperatur gekühlt.

Von dieser Dispersion wurden 671,30 g in einem Reaktor mit Ankerrührer, Thermometer, Gaseintrittsrohr, Beschickungsrohren und Rückflusskühler und 2127,84 g Wasser, 2,59 g Texapon® NSO (28%ig in Wasser) und 290 g Styrol vorgelegt. Der Kolbeninhalt wurde dann 24 Stunden bei Raumtemperatur bei einer Drehzahl von 150 min-1 gerührt und anschließend erhitzt. Während dieser Zeit wurde dem Reaktor Stickstoff zugeführt. Bei Erreichen einer Temperatur von 75°C wurde die Stickstoffzufuhr eingestellt, und es wurde vermieden, dass Luft in den Reaktor gelangte. Dann wurde dem Reaktor über 5 Stunden eine Natriumperoxodisulfatlösung aus 1,45g Natriumperoxodisulfat in 143,55 g Wasser zugeführt und es wurde für 2 Stunden bei 75°C auspolymerisiert. Danach wurde die Dispersion auf Raumtemperatur abgekühlt.

Von dieser Dispersion wurden 600g in einem Reaktor mit Ankerrührer, Thermometer, Gaseintrittsrohr, Beschickungsrohren und Rückflusskühler und 355,86 g Wasser, 0,8 g Texapon® NSO (28%ig in Wasser), 45,00 g Styrol, 45,00 g n-Butylacrylat und 0,05 g Dissolvine E-Fe 6 vorgelegt. Der Kolbeninhalt wurde dann 24 Stunden bei Raumtemperatur bei einer Drehzahl von 150 min-1 gerührt und anschließend erhitzt. Während dieser Zeit wurde dem Reaktor Stickstoff zugeführt. Bei Erreichen einer Temperatur von 60°C wurde die Stickstoffzufuhr eingestellt, und es wurde vermieden, dass Luft in den Reaktor gelangte. Dann wurden dem Reaktor über 5 Stunden eine Natriumperoxodisulfatlösung aus 0,9g Natriumperoxodisulfat in 89,10 g Wasser und 0,18 g Lutavit® C in 71,82g Wasser zugeführt und 2 Stunden bei 60°C auspolymerisiert. Danach wurde die Dispersion auf Raumtemperatur abgekühlt.

Die Zusammensetzung der Zuläufe war wie folgt:

|  |  |
|---|---|
| Vorlage: | |
| 1928,33g | VE-Wasser |
| Zulauf 1: Monomerzulauf | |
| 890,00 g | Styrol |
| Zulauf 2: Initiatorlösung | |
| 178,00 g | Natriumperoxodisulfat, Massekonz. 5 % in Wasser |
| 2.Stufe: | |
| Vorlage: | |
| 2127,84 g | VE-Wasser |
| 671,30 g | Saat (Polystyrolteilchen aus 1.Stufe), Massekonz.: 28,8 % in Wasser |
| 2,59 g | Texapon NSO, Massekonz.: 28 % in Wasser |
| 290,00 g | Styrol |
| | |
| Zulauf 1: Initiatorlösung | |
| 145,00 g | Natriumperoxodisulfat, Massekonz. 1 % in Wasser |
| | |
| 3.Stufe: | |
| Vorlage: | |
| 355,86 g | VE-Wasser |
| 600,00 g | Saat (Polystyrolteilchen aus 2.Stufe), Massekonz.: 14,3 % in Wasser |
| 0,80 g | Texapon NSO, Massekonz.: 28 % in Wasser |
| 45,00 g | Styrol |

(fortgesetzt)

3.Stufe:
Vorlage:
45,00g            n-Butyacrylat

Zulauf 1: Initiatorlösung
90,00 g            Natriumperoxodisulfat, Massekonz. 1 % in Wasser

Redox-Zulauf:
72,00g            Lutavit C, Massekonz. 0,25 % in Wasser

Nassmusterwerte:
Feststoffgehalt::    14,5%
AUZ:           1105nm
PDI (AUZ):      0,101

| Beispiel | Probe aus Bsp. | Morphologie | Analog Beispiel 38 außer Zusammensetzung 3. Stufe | Wasser | Isopropanol | Laserbeugung | Isopropanol 3 h | Ormorcer Isoproanol 1 Tag |
|---|---|---|---|---|---|---|---|---|
| 42 | | sticky shell | 50pphm Styrol, 50pphm n-BA, 0,25pphm Texapon NSO, 1pphm NaPS, 0.25pphm Lutavit C, Saat Polyt.: 60°C | nach ca. 60sec AF: kein Ablösen | Nach 60 sec AF: kein Ablösen CF: keine Schlierenbildung | 90/ 90 ** | 100% | 1d ISO bei GKP 100% |

Eine Herausforderung bei der Herstellung photonischer Kristalle mit sehr großen Oberflächen besteht darin, dass sich beim Trocknen der Dispersion zu den kristallinen Filmen sehr leicht Risse in der Oberfläche bilden, die die kristalline Ordnung zwar nicht in der Ausrichtung stören, aber dennoch den Einkristalle zu einer multikristallinen Anordnung umwandeln, die die Anwendungsmöglichkeiten begrenzen. Diese Risse werden in der Kristallographie Korngrenzen genannt. Überraschenderweise wurde nun gefunden, dass weiche Bestandteile auf der Oberfläche die Anzahl dieser Korngrenzen deutlich reduziert und es sogar ermöglicht, Einkristalle im Zentimeter-Bereich frei von Korngrenzen zu züchten. Diese weichen Bestandteile auf der Oberfläche können auch kombiniert werden mit polaren oder reaktiven Bestandteilen auf der Oberfläche der Teilchen.

***Dispersionen für photonischer Kristalle, die durch UV-Bestrahlung interpartikulär vernetzt oder dreidimensional strukturiert werden können***

**Beispiele 43 bis 46: Trimethylolpropantri-(ethoxy-acrylat) (Laromer® 8863 von Ciba Speciality Chemicals) wässrig gelöst im Serum der Dispersion und UV-Vernetzung durch Bestrahlen des photonischen Kristalls mit UV-Licht (radikalisch)**

Der UV-Initiator ist ein radikalischer Initiator, der die Teilchenoberfläche anquillt, in die eindringt udn so vernetzt.
Auch bildmäßige Belichtung zur Strukturierung des photonischen Kristalls und zur Herstellung eines inversen photonischen Kristalls ist damit möglich.

*UV-Vernetzung radikalisch*

| Beispiel | Probe aus Bsp./Abmischung | Morphologie | Analog Beispiel3 außer Zusammensetzung 3. Stufe | Wasser | Isopropanol | Laserbeugung | Isopropanol 3 h | Ormorcer Isoproanol 1 Tag |
|---|---|---|---|---|---|---|---|---|
| 43 | | | 100pphm Styrol, 0,25pphm Texapon NSO, 0,75pphm NaPS, Saat Polytemp. 75°C | nach ca. 60sec AF: kein Ablösen | nach ca. 60sec AF: Ablösen ca. 10 mm$^2$ | 70 / 90 | 0% | 0% |
| 44 | 43 + Abgemischt mit 1 % Laromer LR 8863 | UV aktiviert mit 2 % Irgacure 500 | | nach 60sec AF: kein Ablösen | nach 60 sec AF: kein Ablösen  CF: keine Schlierenbildung | 70 / 90 | 90% | 70% |
| 45 | 43 + Abgemischt mit 2% Laromer LR 8863 | UV aktiviert mit 4 % Irgacure 500 | | nach 60sec AF: kein Ablösen | nach 60 sec AF: kein Ablösen  CF: keine Schlierenbildung | 70 / 90 | 100% | 90% |
| 46 | 43 + Abgemischt mit 3% Laromer LR 8863 | UV aktiviert mit 6 % Irgacure 500 | | nach 60sec AF: kein Ablösen | nach 60 sec AF: kein Ablösen  CF: keine Schlierenbildung | 70 / 90 | 100% | 100% |
| | | | | | | | | |

**Beispiele 47 bis 50 Dispersionsteilchen mit Epoxyd-Gruppen auf der Oberfläche, die durch einen UV aktivierbarem kationischen Initiator zur interpartikulären Vernetzung angeregt werden.**

Auch bildmäßige Belichtung zur Strukturierung des photonischen Kristalls und zur Herstellung eines inversen photonischen Kristalls ist damit möglich.

*UV-Vernetzung kationisch*

| Beispiel | Probe aus Bsp. | Morphologie | Analog Beispiel 3 außer Zusammensetzung 3. Stufe | Wasser | Isopropanol | Laserbeugung | Isopropanol 3 h | Ormorcer Isoproanol 1 Tag |
|---|---|---|---|---|---|---|---|---|
| 47 | | | 90pphm Styrol, 10 pphm Glycidyl methacrylat (GMA), 0,25pphm Texapon NSO, 0,75pphm NaPS, Saat Polytemp. 75°C | nach ca. 60sec<br><br>AF: kein Ablösen | nach ca. 60sec AF: Ablösen ca. 10 mm$^2$ | 70 / 90 | 0% | 0% |
| 48 | 47<br><br>BB | 2 min UV<br><br>belichtet mit 2 % **BB** | | nach 60sec<br><br>AF: kein Ablösen | nach 60 sec<br><br>AF: kein Ablösen CF: keine Schlierenbildung | 70 / 90 | 90% | 70% |
| 49 | 47 | 2 min UV belichtet mit 4 % **AA** | | nach 60sec AF: kein Ablösen | nach 60 sec AF: kein Ablösen<br><br>CF: keine Schlierenbildung | 70 / 90 | 100% | 90% |
| 50 | 47 | 2 min UV belichtet mit 6 % **AA** | | nach 60sec AF: kein Ablösen | nach 60 sec AF: kein Ablösen<br><br>CF: keine Schlierenbildung | 70 / 90 | 100% | 100% |

EP 2 191 309 B1

35

Glycidylmethacrylat ist im Teilchen gebunden und stellt einen UV-aktivierten Säurespender dar.

**Beschreibung der Diazonium-Salze als UV-Katalysatoren**

Die ringöffnende Reaktion von Epoxyden geschieht mithilfe von Lewis-Säuren beim Belichten von Diazonium-Salzen.
(Rabek, J.F. (1987), Mechanism of Photophysical and Photochemical Reaction in Polymer: Theory and Practical Applications, Wiley, New York) oder
(Crivello J.V. ,(1984), Adv. In Polymer Sci., 62,1.)
Die Wirksamkeit der Diazonium-Salze hängt von der Substitution des Vinyl-Rings ab. Diese Substitution beeinflusst auch die Empfindlichkeit. ebenso wie die Natur des Anions ($BF_4^-$, $Pur_6^-$, $FeCl_4^-$, $AsF_6^-$, $SbF_6^-$, ....,).
Die Sensibilisierung des Zerfalls von Diazonium-Salzen in Anwesenheit verschiedener Elektronendonoren wie beispielsweise Ketone, Farbstoffe und Kohlenwasserstoffe wurden beschrieben. (Timpe H.J., (1986), Photopolymere: Prinzipien und Anwendungen. Die Sitzungsberichte der Akademie der Wissenschaften der DDR, 13N, 1, Leipzig.)

**Beschreibung der Onium-Salze als UV-Katalysatoren**

Für die hier beschriebene interpartikuläre Vernetzung von Dispersionsteilchen sind auch die Onium-Salze und die organometallischen Komplexe wie Ferrocenium-Salze geeignet. (Fouassier J.-P. (Ed.), "Photoinitiation, Photopolymerization and Photocuring - Fundamental and Applications", Hanser Publisher, Munich, (1995), chapter 4).
Die Jodonium-und Sulphonium-Verbindungen sind sehr wirksame Fotoinitiatoren, da sie die Bröndstedt-Säuren als initiierende Spezies produzieren.
Verwendung finden die Diaryl-oder Triaryl-Onium-Salze und deren entsprechenden langkettigen Alkyl-Derivate wie beispielsweise Ciba Irgacure 500, ein Gemisch aus Benzophenon und 1-Hydroxycyclohexylphenylketon (50 : 50).
Für die interpartikuläre UV-Vernetzung bei photonischen Kristallen sind besonders die Dialkyl-phenacyl-Sulphonium Salze, wie (Dodecyl-, Methyl-, Phenacyl)-Sulphonium-Hexafluoroantimonat **(AA)** oder (p-(Decylphenol)-, phenyl)-Jodonium-Hexafluoroantimonat **(BB)** geeignet.
(Crivello J.V., et.al., RadTech North America, UV&EB Technology, Charlotte, NC, May 2004, Technical Conference Proceedings 2004)
Diese beiden zuletzt genannten UV-Initiatoren, **(AA)** und **(BB)** wurden in den Beispielen 48 bis 53 wie angegeben verwendet.

**Beispiele 51 bis 53: Dispersionsteilchen mit t-Butylacrylat (t-BA)-Gruppen auf der Oberfläche (analog Beispiel 32) und wässrig gelöst im Serum mit UV aktivierbarem Säurespender für den katalytischen Abbau des t-Butylacrylates zu Acrylsäure**

Als UV aktivierbare Säurespender für die Vernetzung eignen sich die gleichen Verbindungen, die vorstehend als Onium-Salze bereits als UV aktivierbare kationischer Initiatoren beschrieben sind, da diese nicht nur als latente Quelle von kationischen Radikalen, sondern auch als Quelle einer Bröndstedt-Säure bei UV-Belichtung dienen können. Diese photochemisch erzeugte Säure ist in der Lage, den Zerfall des tertiären Butylacrylates in Acrylsäure und Isobuten zu katalysieren. Als Vergleichsversuch dient Beispiel 32, bei dem Dispersionsteilchen mit tertiärem Butylacrylat auf der Oberfläche hergestellt wurden. In diesem Fall wird nur nicht wie in Beispiel 33 ausgeführt, 5h bei 95°C gerührt, um aus t-BA bereits in der wässrigen Dispersion Acrylsäure auf der Teilchenoberfläche herzustellen, sondern Beispiel 32 wird direkt ohne weiteres Tempern für die im folgenden aufgeführten Beispiele 51 bis 53 verwendet. Die Acrylsäure auf der Oberfläche wird somit nicht bereits bei der Herstellung der Dispersion, sondern erst im photonischen Kristalle auf der Oberfläche der individuellen Teilchen erzeugt. Nach vollflächiger Belichtung oder bildmäßiger Belichtung mit einem UV-Laser lässt sich unter Anwesenheit der oben beschriebenen UV-Katalysatoren auf der Oberfläche der Teilchen im photonischen Kristalls die Acrylsäure katalytisch bei relativ milden thermischen Bedingungen von 15 Minuten bei 70°C erzeugen. Wird der photonische Kristall anschließend alkalisch bei etwa pH 9 gewässert, so lösen sich die belichteten Dispersionsteilchen aus dem photonischen Kristall heraus. Damit entsteht die gewünschte dreidimensionale Strukturierung, gekennzeichnet durch Hohlräume (Defektlinien) im photonischen Kristall. Dieser dient beispielsweise als Templat , das heißt die Hohlräume zwischen den Teilchen (die nicht belichtet wurden) und die Defektlinien, die durch Belichten und Auswaschen ganzer Dispersionsteilchen entstanden sind, lassen sich mit anorganischen Materialien wie Titandioxid oder Silizium, die einen sehr hohen Brechungsindex besitzen, füllen. Nach dem Herausbrennen der organischen Dispersionsteilchen verbleibt ein anorganischer dreidimensional strukturierter inverser photonischer Kristalle, der als optisches Bauelement, oder optischer Halbleiter völlig in Analogie zum elektrischen Halbleiter zum Beispiel zur Herstellung eines optischen Computers, verwendet werden kann. Auch Teile von Polymerteilchen können herausgebrannt oder löslich gemacht oder vernetzt werden.

Das heißt, wichtig für die dreidimensionale Strukturierung des photonischen Kristalls ist nun, dass auch dreidimensionale bildmäßige Belichtung des photonischen Kristalls und damit die Herstellung eines dreidimensionale strukturierten inversen photonischen Kristalls möglich ist.

UV- katalytischer Abbau des t-Bufylacrylats zu Acrylsäure

| Beispiel | Probe aus Bsp. | Morphologie | Analog Beispiel 3 außer Zusammensetzung 3. Stufe | Wasser | Isopropanol | Laserbeugung | Isopropanol 3 h | Ormorcer Isoproanol 1 Tag |
|---|---|---|---|---|---|---|---|---|
| 51 | 32 | UV aktiviert mit 4 % **BB** und 5 min UV-belichtet, und 15 min 70 °C getempert | | nach 60sec AF: kein Ablösen | nach 60 sec AF: kein Ablösen CF: keine Schlierenbildung | 30/90 | 90% | 70% |
| 52 | 32 | UV aktiviert mit 4 % **AA** und 5 min UV-belichtet und 15 min 70 °C getempert | | nach 60sec AF: kein Ablösen | nach 60 sec AF: kein Ablösen CF: keine Schlierenbildung | 30 / 90 | 100 % | 80% |
| 53 | 32 | UV aktiviert mit 6 % **AA** und 5 min UV-belichtet und 15 min 70 °C getempert | | nach 60sec AF: kein Ablösen | nach 60 sec AF: kein Ablösen CF: keine Schlierenbildung | 30 / 90 | 100 % | 100% |

Der durch Trocknen aus der Dispersion hergestellte photonische Kristall enthält zwischen den kugelförmigen Teilchen Hohlräume. Diese werden mit dem wässrig gelösten Initiator isorefraktiv gefüllt, das heißt der Brechungsindex der Teilchen und der Brechungsindex der mit der Lösung gefüllten Zwischenräume ist identisch. Somit kann störungsfrei der Kristall dreidimensional (gegebenenfalls holographisch oder im Zwei-Photonen-Prozess) bildmäßig belichtet werden. Durch die UV Belichtung (5 Minuten kontinuierlich oder beispielsweise mit einem gepulsten UV-Laser) und durch die thermische Nachbehandlung (5 Minuten bei 70°C) werden die Dispersionsteilchen nur an den belichteten Stellen löslich, da t-Butylacrylat in Acrylsäure zersetzt wird. Diese belichteten Bereiche können nun mit einer wässrigen NaOH-Lösung (pH 9) herausgelöst werden, so dass nach dem Trocknen und der Beseitigung der Flüssigkeit Hohlräume zwischen den Teilchen und an den belichteten ein-, zwei- oder dreidimensionalen Räumen entstehen. Diese Räume sind nun bildmäßig im photonischen Kristalle verteilt, entsprechend der bildmäßigen Belichtung. Alle Freiräume können nun mit hochbrechenden Materialien, wie beispielsweise $TiO_2$ oder Silizium, gefüllt werden, so dass ein inverser ein-, zwei- oder dreidimensional strukturierter photonischer Kristall entsteht.

Photonische Kristalle aus Polymerteilchen mit interpartikulärer Wechselwirkung

Beispiele

### Beispiel 54

### Photonischer Kristall mit chemischem Vernetzer Diallylphthalat (DAP) als stabiles Templat zur Herstellung von Farbpigmenten

In einem Reaktor mit Ankerrührer, Thermometer, Gaseintrittsrohr, Beschickungsrohren und Rückflusskühler wurden zunächst 703,99 g Wasser und 1,01 g DAP-Saat vorgelegt. Der Kolbeninhalt wurde anschließend erhitzt und bei einer Drehzahl von 150 min-1 gerührt. Während dieser Zeit wurde dem Reaktor Stickstoff zugeführt. Bei Erreichen einer Temperatur von 85 °C wurde die Stickstoffzufuhr eingestellt, und es wurde vermieden, dass Luft in den Reaktor gelangte. Dann wurden dem Reaktor 20 % einer Natriumperoxodisulfatlösung aus 4,6 g Natriumperoxodisulfat in 61,1 g Wasser zugeführt und 5 Minuten lang voroxidiert, dann wurde der Rest Natriumperoxodisulfatlösung innerhalb von 4,5 Stunden zugesetzt. Zeitgleich wurde der Monomerzulauf bestehend aus 250 g Wasser, 4,11 g Disponil FES 27-28%ig (Natriumlaurylethersulfat), 2,3 g Natronlauge-25%ig, 23 g Diallylphthalat, 427.8 g Styrol, 9,2 g Acrylsäure und 18,27 g Wasser (zum Spülen der Zulaufleitung) wie folgt dosiert: 5 %, 15 % und 80 % in je 1,5 Stunden zudosiert. Nach Monomer- und Natriumperoxodisulfatlösungzulauf-Ende wurde die Dispersion für 1 Stunde bei 85 °C gerührt. Danach wurde die Dispersion auf Raumtemperatur gekühlt.

|  |  |
|---|---|
| Nassmusterwerte: | |
| Feststoffgehalt: | 30,7% |
| TG (HPPS): | 335 nm |
| PDI (HPPS): | 0,021 |

Diese Dispersion wird vorsichtig in einem dünnen Film getrocknet. Dabei entsteht durch Kristallisation und anschließende Vernetzung ein großer mechanisch besonders stabiler photonischer Kristall. Da die Vernetzung nur an den Berührungspunkten der Dispersionsteilchen stattfindet, ensteht eine großvolumige Zwickelphase. Deshalb eignet sich der photonische Kristall besonders als Templat zur Invertierung mit $TiO_2$ oder $SiO_2$. Nach dem Ausbrennen der organischen Templat-Phase entsteht ein in intensiven Farben funkelndes mechanisch besonders stabiles anorganisches Farbpigment, das zum Beispiel im Bereich der Kosmetik oder für Autolacke verwendet werden kann.

### Beispiel 56

### Photonischer Kristall mit physikalischem Vernetzer Butandiolmonoacrylat als stabiles Templat zur Herstellung von Farbpigmenten

1. Stufe:

In einem Reaktor mit Ankerrührer, Thermometer, Gaseintrittsrohr, Beschickungsrohren und Rückflusskühler wurden zunächst 704,02 g Wasser und 2,03 g DAP-Saat vorgelegt. Der Kolbeninhalt wurde anschließend erhitzt und bei einer Drehzahl von 150 min-1 gerührt. Während dieser Zeit wurde dem Reaktor Stickstoff zugeführt. Bei Erreichen einer Temperatur von 85 °C wurde die Stickstoffzufuhr eingestellt, und es wurde vermieden, dass Luft in den Reaktor gelangte. Dann wurden dem Reaktor 20 % einer Natriumperoxodisulfatlösung aus 4,6 g Natriumperoxodisulfat in 61,1 g Wasser zugeführt und 5 Minuten lang voroxidiert, dann wurde der Rest Natriumperoxodisulfatlösung innerhalb von 4,5 Stunden zugesetzt. Zeitgleich wurde der Monomerzulauf bestehend aus 250 g Wasser, 4,11 g Disponil FES 27-28 %ig (Natriumlaurylethersulfat), 2,3 g Natronlauge-25%ig, 23 g Diallylphthalat, 427,8 g Styrol, 9,2 g Acrylsäure und 18,27 g Wasser (zum Spülen der Zulaufleitung wie folgt dosiert: 5 %, 15 % und 80 % in je 1,5 Stunden zudosiert. Nach Monomer- und Natriumperoxodisulfatlösungzulauf Ende wurde die Dispersion für 1 Stunde bei 85 °C gerührt. Danach wurde die Dispersion auf Raumtemperatur gekühlt.

Nassmusterwerte:

Feststoffgehalt: 30,3%

TG.(HPPS): 272 nm

PDI (HPPS): 0,04

2. Stufe:

In einem Reaktor mit Ankerrührer, Thermometer, Gaseintrittsrohr, Beschickungsrohren und Rückflusskühler wurden zunächst 223,41 g Wasser 671,43 g der 1. Stufe , 156,8 g Styrol und 3,2 g Butandiolmonoacrylat vorgelegt. Der Kolbeninhalt wurde anschließend 24 Stunden bei Raumtemperatur bei einer Drehzahl von 150 min-1 gerührt. Nach 24 Stunden Rühren wurde auf 75 °C aufgeheizt, während dieser Zeit wurde dem Reaktor Stickstoff zugeführt. Bei Erreichen einer Temperatur von 75 °C wurde die Stickstoffzufuhr eingestellt, und es wurde vermieden, dass Luft in den Reaktor gelangte. Dann wurden dem Reaktor 80 g Natriumperaxodisulfatlösung aus 0,8 g Natriumperoxodisulfat in 79,2 g Wasser innerhalb von 4 Stunden zugesetzt. Nach Natriumperoxodisulfatlösungzulauf-Ende wurde die Dispersion für 2 Stunden bei 75 °C gerührt. Danach wurde die Drehzahl auf 100 min-1 eingestellt und schonend auf Raumtemperatur gekühlt.

Nassmusterwerte:

Feststoffgehalt: 32,4%

TG (HPPS): 351 nm

PDI (HPPS): 0.089

Diese Dispersion wird vorsichtig in einem dünnen Film getrocknet. Dabei entsteht durch Kristallisation und anschließende Vernetzung ein großer mechanisch besonders stabiler photonischer Kristall. Da die Vernetzung nur an den Berührungspunkten der Dispersionsteilchen stattfindet, entsteht eine großvolumige Zwickelphase. Deshalb eignet sich der photonische Kristall besonders als Templat zur Invertierung mit $TiO_2$ oder $SiO_2$. Nach dem Ausbrennen der organischen Templat-Phase entsteht ein in intensiven Farben funkelndes mechanisch besonders stabiles anorganisches Farbpigment, das zum Beispiel Im Bereich der Kosmetik oder für Autolacke verwendet werden kann.

**Patentansprüche**

1. Verfahren zur Herstellung von inversen photonischen Kristallen, **dadurch gekennzeichnet, dass** photonische Kristalle aus einer wässrigen Dispersion von Polymerteilchen, die nicht verfilmen und an ihren Berührungspunkten im photonischen Kristall Verknüpfungsstellen aufweisen, die eine Verknüpfung der Teilchen durch physikalische oder chemische Bindung erlauben, ohne das Volumen der Zwickelphase, wobei als Zwickelphase die verbleibenden Hohlräume im photonischen Kristall bezeichnet werden, die sich nach der Bildung des photonischen Kristalls aus einer wässrigen Dispersion der Polymerteilchen durch Verflüchtigung des Wassers bilden, um mehr als 30% zu vermindern, wobei die chemische Bindung dadurch erreicht wird, dass die Polymerteilchen zumindest an den Berührungspunkten an das Polymerteilchen gebundene chemische Gruppen aufweisen, die miteinander bei Umgebungstemperatur thermisch kovalent miteinander verbunden werden können, oder die physikalische Bindung dadurch erreicht wird, dass die Polymerteilchen zumindest an den Berührungspunkten an das Polymer gebundene chemische Gruppen aufweisen, die miteinander Wasserstoffbrücken-Bindungen eingehen können, durch Verflüchtigung des Wassers gebildet werden, die Hohlräume zwischen den Polymerteilchen mit anorganischen Substanzen, wie Silizium, $TiO_2$ gefüllt werden und danach die Polymerteilchen entfernt werden, wobei die Polymerteilchen zumindest im Kern zu mehr als 70 Gew.% aus monovalenten Kohlenwasserstoff-Monomeren und zu 0 bis 30 Gew.-% aus vernetzenden Monomeren bestehen.

2. Verfahren nach Anspruch 1, **dadurch gekennzeichnet, dass** die Polymerteilchen durch Aufschmelzen und Herauslösen oder durch Herausbrennen bei hohen Temperaturen entfernt werden.

**3.** Verfahren nach einem der Ansprüche 1 oder 2, **dadurch gekennzeichnet, dass** der Polydispersitätsindex als Maß für die Einheitlichkeit der Polymerteilchen < 0,15 ist, wobei der Polydispersitätsindex nach der Formel p.i.=(D90-D10)/D50, worin D90, D10 und D50 Teilchendurchmesser bezeichnen, für die gilt:

D90: 90 Gew.-% der Gesamtmasse aller Teilchen hat einen Teilchendurchmesser < oder = D90
D50: 50 Gew.-% der Gesamtmasse aller Teilchen hat einen Teilchendurchmesser $\leq$ D50
D10: 10 Gew.-% der Gesamtmasse aller Teilchen hat einen Teilchendurchmesser < oder = D10,

berechnet wird.

**4.** Verfahren nach einem der Ansprüche 1 bis 3, **dadurch gekennzeichnet, dass** die Polymerteilchen zu mehr als 90 Gew.% aus Styrol bestehen und es sich beim Vernetzer um Divinylbenzol handelt.

**5.** Verfahren nach einem der Ansprüche 1 bis 4, **dadurch gekennzeichnet, dass** die Herstellung der Polymerteilchen durch emulgatorfrei Emulsionspolymerisation erfolgt.

**6.** Verfahren nach einem der Ansprüche 1 bis 4, **dadurch gekennzeichnet, dass** die Herstellung der Polymerteilchen durch emulgatorfreie Emulsionspolymerisation und Quellungspolymerisation erfolgt.

**7.** Verfahren nach Anspruch 6, **dadurch gekennzeichnet, dass** die Quellungspolymerisation in mindestens zwei Stufen vorgenommen wird.

**8.** Verfahren nach einem der Ansprüche 5 bis 7, **dadurch gekennzeichnet, dass** die Emulsionspolymerisation im Zulaufverfahren In Stufenfahrweise durchgeführt wird.

**9.** Verfahren nach einem der Ansprüche 1 bis 8, **dadurch gekennzeichnet, dass** das Kernpolymer zu mehr als 90 % aus hydrophoben Monomeren besteht, die keine ionischen und polaren Gruppen enthalten.

**10.** Verfahren nach einem der Ansprüche 1 bis 9, **dadurch gekennzeichnet, dass** die photonischen Kristalle eine Kantenlänge von mehr als 200 $\mu$m, vorzugsweise mehr als 500 $\mu$m, besonders bevorzugt mehr als 2 mm aufweisen.

**Claims**

**1.** A process for producing inverse photonic crystals, wherein photonic crystals are formed from an aqueous dispersion of polymer particles which do not film and have, at their contact points in the photonic crystal, linkage sites which allow linkage of the particles by physical or chemical bonding, without reducing the volume of the interstitial phase, the interstitial phase referring to the remaining cavities in the photonic crystal which form after the formation of the photonic crystal from an aqueous dispersion of the polymer particles by volatilization of the water, by more than 30%, the chemical bonding being achieved by virtue of the polymer particles having, at least at the contact points, chemical groups which are bonded to the polymer particle and can be bonded thermally and covalently to one another at ambient temperature, or the physical bonding being achieved by virtue of the polymer particles having, at least at the contact points, chemical groups which are bonded to the polymer and can enter into hydrogen bonds with one another, by volatilization of the water, the cavities between the polymer particles are filled by inorganic substances, such as silicon, $TiO_2$, and then the polymer particles are removed, the polymer particles, at least in the core, consisting to an extent of more than 70% by weight of monovalent hydrocarbon monomers and to an extent of 0 to 30% by weight of crosslinking monomers.

**2.** The process according to claim 1, wherein the polymer particles are removed by melting and leaching-out or by burning-out at high temperatures.

**3.** The process according to either of claims 1 and 2, wherein the polydispersity index, as a measure of the uniformity of the polymer particles, is < 0.15, where the polydispersity index is calculated by the formula p.i. = (D90-D10)/D50 in which D90, D10 and D50 denote particle diameters for which:

D90: 90% by weight of the total mass of all particles has a particle diameter < or = D90
D50: 50% by weight of the total mass of all particles has a particle diameter $\leq$ D50
D10: 10% by weight of the total mass of all particles has a particle diameter < or = D10.

4. The process according to any of claims 1 to 3, wherein the polymer particles consist of styrene to an extent of more than 90% by weight and the crosslinker is divinylbenzene.

5. The process according to any of claims 1 to 4, wherein the polymer particles are produced by emulsifier-free emulsion polymerization.

6. The process according to any of claims 1 to 4, wherein the polymer particles are produced by emulsifier-free emulsion polymerization and swelling polymerization.

7. The process according to claim 6, wherein the swelling polymerization is undertaken in at least two stages.

8. The process according to any of claims 5 to 7, wherein the emulsion polymerization is performed in a feed process in stepwise mode.

9. The process according to any of claims 1 to 8, wherein the core polymer consists to an extent of more than 90% of hydrophobic monomers which comprise no ionic or polar groups.

10. The process according to any of claims 1 to 9, wherein the photonic crystals have an edge length of more than 200 $\mu$m, preferably more than 500 $\mu$m, more preferably more than 2 mm.


**Revendications**

1. Procédé pour la fabrication de cristaux photoniques inversés, **caractérisé en ce qu'**on forme par volatilisation de l'eau des cristaux photoniques à partir d'une dispersion aqueuse de particules de polymère qui ne forment pas de film et présentent au niveau de leurs points de contact dans le cristal photonique des points de jonction qui permettent un attachement des particules par liaison physique ou chimique, sans réduire de plus de 30 % le volume de la phase lacunaire, en désignant par phase lacunaire les espaces vides restants dans le cristal photonique, qui se forment après la formation du cristal photonique à partir d'une dispersion aqueuse des particules de polymère par volatilisation de l'eau, la liaison chimique étant réalisée par le fait que les particules de polymère comportent, au moins au niveau des points de contact, des groupes chimiques liés à la particule de polymère, qui peuvent être liés entre eux par covalence thermiquement à la température ambiante, ou la liaison physique étant réalisée par le fait que les particules de polymère comportent, au moins au niveau des points de contact, des groupes chimiques liés au polymère, qui peuvent engendrer entre eux des liaisons par ponts hydrogène, on remplit les espaces vides entre les particules de polymère avec des substances inorganiques, telles que le silicium, $TiO_2$ et ensuite on élimine les particules de polymère, les particules de polymère étant constituées au moins dans le noyau à raison de plus de 70 % en poids de monomères hydrocarbonés monovalents et à raison de 0 à 30 % en poids de monomères réticulables.

2. Procédé selon la revendication 1, **caractérisé en ce qu'**on élimine les particules de polymère par fusion et élimination par dissolution ou par élimination par combustion à hautes températures.

3. Procédé selon l'une quelconque des revendications 1 et 2, **caractérisé en ce que** l'indice de polydispersité en tant que mesure de l'homogénéité des particules de polymère est < 0,15, l'indice de polydispersité étant calculé selon la formule i.p. = (D90-D10)/D50, dans laquelle D90, D10 et D50 désignent les diamètres de particules, à savoir :

   D90 : 90 % en poids de la masse totale de toutes les particules ont un diamètre de particule < ou = D90
   D50 : 50 % en poids de la masse totale de toutes les particules ont un diamètre de particule $\leq$ D50
   D10 : 10 % en poids de la masse totale de toutes les particules ont un diamètre de particule < ou = D10.

4. Procédé selon l'une quelconque des revendications 1 à 3, **caractérisé en ce que** les particules de polymère sont constituées à raison de plus de 90 % en poids de styrène et l'agent de réticulation consiste en divinylbenzène.

5. Procédé selon l'une quelconque des revendications 1 à 4, **caractérisé en ce que** la production des particules de polymère s'effectue par polymérisation en émulsion sans émulsifiant.

6. Procédé selon l'une quelconque des revendications 1 à 4, **caractérisé en ce que** la production des particules de polymère s'effectue par polymérisation en émulsion sans émulsifiant et polymérisation à stades de gonflement.

**7.** Procédé selon la revendication 6, **caractérisé en ce que** la polymérisation à stades de gonflement est effectuée en au moins deux stades.

**8.** Procédé selon l'une quelconque des revendications 5 à 7, **caractérisé en ce que** la polymérisation en émulsion est effectuée dans le procédé avec addition en mode opératoire par stades.

**9.** Procédé selon l'une quelconque des revendications 1 à 8, **caractérisé en ce que** le polymère noyau est constitué à raison de plus de 90 % de monomères hydrophobes, qui ne contiennent pas de groupes ioniques ni de groupes polaires.

**10.** Procédé selon l'une quelconque des revendications 1 à 9, **caractérisé en ce que** les cristaux photoniques présentent une longueur d'arête de plus de 200 $\mu$m, de préférence de plus de 500 $\mu$m, de façon particulièrement préférée de plus de 2 mm.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 955323 A
- DE 10245848 A
- EP 1046658 A
- EP 06123516 A

**In der Beschreibung aufgeführte Nicht-Patentliteratur**

- **CHAD E. REESE ; SANDFORD A. ASHER.** *Journal of Colloid and Interface Science,* 2002, vol. 248, 41-46
- **T. RUHL et al.** Photonic crystals from inorganic - polymeric hybrid - particles. *Proceedings of the SPIE,* vol. 6182
- **F. FLEISCHHAKER et al.** Functional opals from reactive polymers: complex structures, sensors, and modified photoluminescence. *Macromolecular Symposia,* 08. Oktober 2007, vol. 254 (1), 210-216
- **W. MÄCHTLE.** *Makromolekulare Chemie,* 1984, vol. 185, 1025-1039
- Handbook of Polymer Science and Technology, New York. Marcel Dekker, Inc, 1989
- **RABEK, J.F.** Mechanism of Photophysical and Photochemical Reaction in Polymer: Theory and Practical Applications. Wiley
- **CRIVELLO J.V.** *Adv. In Polymer Sci.,* 1984, vol. 62, 1
- Photopolymere: Prinzipien und Anwendungen. **TIMPE H.J.** Die Sitzungsberichte der Akademie der Wissenschaften der DDR. 1986
- Photoinitiation, Photopolymerization and Photocuring - Fundamental and Applications. Hanser Publisher, 1995
- **CRIVELLO J.V.** RadTech North America, UV&EB Technology, Charlotte, NC. *Technical Conference Proceedings,* Mai 2004